# EUROPEAN PATENT APPLICATION

(11) **EP 4 549 009 A1**
(43) Date of publication of application: **07.05.2025**
(21) Application number: 24211138.3
(22) Date of filing: 06.11.2024
(51) Int. Cl.: B01J 8/00, B01J 8/06, C01B 3/04

(54) **APPARATUS AND PROCESS FOR AMMONIA CRACKING CATALYST ACTIVATION**

(30) Priority: 06.11.2023 US 202363596320 P; 18.03.2024 US 202418607952
(71) Applicant: Air Products and Chemicals, Inc., Allentown, PA 18106-5500 (US)
(72) Inventor: SHAW, Andrew, Sunbury On Thames, TW16 6HJ (GB); SHELLEY, Jacob, 1016 LH Amsterdam (NL); XIE, Kui, Center Valley, 18034 (US); SALOWAY, Simon Craig, Surrey, KT13 9PD (GB); PATIL, Dhaval Dhondu, 392001 Bharuch (IN)
(74) Representative: Beck Greener LLP

(57) **Abstract**

An apparatus and process for the activation of catalyst material utilized in ammonia cracking can include an initial use of hydrogen and heat to perform an initial stage of catalyst activation and a subsequent use of ammonia and heat to perform a subsequent state of catalyst activation. The subsequent use of ammonia can be configured so that different catalytic material at different plant elements are activated in a pre-selected sequence to provide activation of the catalytic material utilized in different plant elements. Some embodiments can be configured to avoid excess temperatures that can be detrimental to equipment that can be positioned upstream of a furnace in some embodiments while also avoiding sintering of the catalytic material.

## Description

The present application claims priority to U.S. Provisional Patent Application No. 63/596,320, filed on November 6, 2023 and U.S. application number 18/607,952 filed on 18 March 2024.

The present innovation relates to processes and apparatuses for activation of catalyst material utilized in ammonia cracking plants and processes.

Ammonia can be cracked to produce hydrogen. Examples of processes that can be used to crack ammonia can be appreciated from US Patent Application Publication No. 2023/0242395 and International Publication Nos. WO2022/265647, WO2022/265648, WO2022/265649, WO2022/265650, WO2022/265651, as well as pending US Patent Application Nos. 17/990832, 17/990823, 17/990817, and 17/990815.

Ammonia cracking processes can involve use of catalyst materials to help facilitate the cracking of ammonia into hydrogen and nitrogen gases. The activation of the catalysts can depend on the catalyst formulation. Activation normally starts at some low temperature and is worked up to a higher final temperature. The final temperature is generally dependent on the active metal species on the catalyst. For example, ruthenium (Ru) catalysts typically use lower final activation temperatures (*e.g.,* less than 350°C) and nickel (Ni) catalysts often require higher final activation temperatures *(*e.g., greater than 350°C). Ru catalysts can also have more stringent requirements on temperature ramping and hold times for catalyst activation as compared to Ni catalysts.

Andrew, S. P. (1981), Theory and practice of the formulation of heterogeneous catalysts. Chemical Engineering Science, 36(9), 1431-1445, discloses that the activation of a catalyst material can involve subjecting the catalyst material to a combination of a higher temperature environment (*e.g.,* application of heat) and exposure to a reducing agent. Twigg, M. V. (1996). Catalyst Handbook (2nd ed.). London: Manson Publishing Ltd. ("Twigg") discloses that hydrogen is a commonly used reducing agent. Twigg also discloses that the activation process for a catalyst is performed for reduction of the precursor metal oxide of the supported metal catalyst to fine crystallites of the metal catalyst so the catalyst is activated and able to provide a reduction in activation energy or a change in the reaction mechanism that can help facilitate a chemical reaction.

We have determined that catalysts used for ammonia cracking can be shipped in an oxidized state, a semi-oxidized state or an at least partially passivated state that can require activating before being used for ammonia cracking. As noted above, activation of the catalytic material can include use of a process by which the catalyst material is exposed to a reducing environment, such as with a hydrogen-containing gas and heat for activating the catalytic material (*e.g.,* removing oxides, removing an oxidized layer surrounding or covering the inner catalytic metal material, removing a passivated layer surrounding or covering the inner catalytic metal material, *etc.).* Conventionally, activation would be done using hydrogen mixed with an inert gas such as nitrogen (see *e.g.,* Twigg, M. V. (1996). Catalyst Handbook (2nd ed.). London: Manson Publishing Ltd.). However, we have determined that the activation of catalyst material that can be positioned in a furnace used for ammonia cracking (*e.g*., positioned in tubes of a furnace through which ammonia can pass for being heated and cracked therein to form hydrogen (H₂) and nitrogen (N₂) can require a very high temperature (*e.g*., a temperature of over 450°C, or over 500°C, or over 600°C (*e.g.,* between 500°C and 700°C, or between 550°C and 675°C, or between 500°C and 600°C, *etc.).* We determined that such a high temperature within the furnace during a prolonged catalyst activation process can causes some types of front-end heat exchangers disclosed in US Patent Application Nos. 17/990823, 17/990817, and 17/990815 to exceed their design temperature unless those heat exchangers are made with special materials that are capable of withstanding very high temperatures due to how the reducing agent and heat can be recirculated through the reactors and the furnace for the activation of catalyst material. However, utilizing such specialty equipment can be detrimental to the sourcing for such equipment and also result in increased costs and production or installation delays as well as special maintenance work and/or higher maintenance costs.

For example, the use of more specialized equipment can pose an increased safety risk due to more dissimilar metals or equipment ratings that can introduce more items that require maintenance oversight and maintenance monitoring. Avoiding or minimizing their use, can help avoid this increased safety risk and these types of additional maintenance activities utilized to account for that increased risk.

We have determined that such high temperature profiles for catalyst activation within an ammonia cracking apparatus configured to implement an ammonia cracking process can be avoided such that lower temperature rated front-end equipment can be utilized. We determined that such a feature can help provide improved catalyst material activation while also providing improved operational efficiency and flexibility. We believe embodiments can also help make ammonia cracking *via* use of use of more environmentally friendly ammonia product (*e.g.,* ammonia produced *via* renewable power sources and/or produced in conjunction with use of carbon dioxide capture technology) more economically attractive so that an increase in environmentally friendly ammonia manufacture and ammonia cracking for hydrogen production can be obtained as well.

In some embodiments, a process and apparatus for catalyst activation for an ammonia cracking apparatus can include utilizing hydrogen as a reactant and heat *via* a furnace for performing an initial first lower temperature phase of catalyst activation over a first catalyst activation time period. This initial first lower temperature activation can include periodically ramping up temperature and/or hydrogen concentration until a first phase of catalyst activation has been met in some implementations. After the first, initial phase of catalyst activation is detected as having occurred, a second higher temperature phase of catalyst activation over a second catalyst activation time period can be performed. This second phase can include use of ammonia as the reagent and use of a higher second temperature profile. This second phase can occur in combination with venting of the hydrogen reactant fluid to remove the hydrogen reactant fluid before or during use of ammonia as the reactant for the second higher temperature phase of the catalyst activation and/or after such venting has occurred. In some embodiments the second phase of higher temperature phase of catalyst activation can occur sequentially after the first phase so that the second phase is initiated to occur immediately after the first initial lower temperature phase has been completed (*e.g.,* the second higher temperature phase can be initiated to occur immediately and directly after the first phase is detected as having been completed *via* the detection of a particular temperature and/or hydrogen content associated with the completion of the initial lower temperature first phase of the catalyst activation process).

In some embodiments, the process can be implemented to help control temperature within units of the ammonia cracking process so that the furnace experiences the highest temperatures and upstream reactor that are upstream of the furnace as well as heat exchangers that are upstream of the furnace experience lower temperatures that are within a pre-selected temperature profile to help avoid that equipment from being exposed to temperatures that are higher than what the equipment is rated for experiencing (*e.g.,* the temperature may not exceed 550°C, or may be between 300°C and 400°C, or may not exceed 350°C, *etc.).* For example, some heat exchangers can have different temperature ratings and the temperature control that may be provided by embodiments catalyst activation processing and apparatuses configured to utilize such a process *c*an be configured so that different heat exchanger equipment is kept within their temperature ratings. Such temperature ratings can vary from 200°C to 690°C for different heat exchangers in some embodiments *(*e.g., one or more pre-heating heat exchangers can have temperature ratings in a range of 200°C to 325°C range while a one or more other heat exchangers have a temperature rating in a range of 325°C to 690°C).

In some implementations, the catalyst activation that is provided can result in a catalyst material in an upstream portion of a furnace being activated first, then a second reactor's catalyst material being activated second even though this second reactor is between a first reactor and the furnace. The catalyst activation that is provided can also then result in activation of the catalyst material of the first reactor before, finally, the catalyst material in the downstream portion of the furnace is activated last. We have found that this type of phased activation can help avoid high temperature profiles in the upstream reactors and upstream heat exchangers while also helping provide a sufficiently timed catalyst activation process that can also help avoid sintering of the catalyst material.

We have surprisingly found that the use of ammonia as a reactant in the second higher temperature phase of catalyst activation can help keep the front-end heat exchangers within lower standard design temperatures. The ammonia that is used in the second higher temperature phase of catalyst activation can be blended with nitrogen or used pure in some embodiments. It is contemplated that nitrogen (N₂) can be injected for mixing with the ammonia to provide a desired flow rate for obtaining a pre-selected flow rate of the second reactant and a pre-selected concentration of ammonia in the second reactant as the second reactant is passed through the pre-reactor(s) and catalyst material containing tube(s) of the furnace.

We have found that the use of ammonia (NH₃) during the catalyst activation can also provide a source of cooling for the overall system (*e.g.,* sensible heat, latent heat, endothermic reaction of ammonia cracking to form nitrogen and hydrogen during the catalyst activation processing involving ammonia as the reactant can provide a cooling effect, *etc.)* which can reduce the demand for other cooling media/equipment *(*e.g., cooling water towers or air cooler duty savings, *etc.)* during catalyst activation as well.

In some embodiments, the ammonia feed rate used during catalyst activation can be significantly lower than the design rate that is used for ammonia cracking to produce hydrogen after the catalyst material is activated. Also, a higher amount of conversion can take places over upstream reactors during catalyst activation. Since most of the ammonia can be utilized in the second phase of catalyst activation so that the ammonia is converted in the upstream pre-reactor(s) during use of the higher temperature second phase of catalyst activation, the temperature in the furnace that is downstream of those reactors can increase rapidly to a desired activation temperature as there is little to significantly less endotherm (or no endotherm in some cases) from the ammonia cracking reaction to consume the heat produced by the burners of the furnace during the catalyst activation process. We have surprisingly found that this effect can result in improved catalyst activation that can also occur more quickly (*e.g.,* the activation process can occur much faster to allow catalyst activation to occur more flexibly, efficiently and quickly because there can be less down time associated with catalyst activation for ammonia cracking processing).

We have also found that embodiments can permit use of some catalyst material that has a significantly higher final activation temperature to be utilized in conjunction with other catalyst material having lower final activation temperatures. For example, in some embodiments, catalyst material with an activation temperature of over 600°C (*e.g.,* 650°C, between 600°C and 700°C, *etc.)* can be utilized in conjunction with other catalyst material having a full activation temperature of no more than 400°C, no more than 350°C, or a temperature between 300°C and 400°C.

In a first aspect, a process for catalyst activation for ammonia cracking can include feeding a first reactant comprising hydrogen to at least one pre-reactor positioned upstream of a furnace having at least one tube within a radiant section of the furnace such that the first reactant is passed through catalyst material of the least one pre-reactor and subsequently passed through catalyst material of the at least one tube within the radiant section of the furnace. In response to detecting a first level of catalyst activation, the feeding of the first reactant can be ceased and feeding of a second reactant comprising ammonia to the at least one pre-reactor and the at least one tube within the radiant section of the furnace can be initiated such that the second reactant is passed through the catalyst material of the least one pre-reactor and subsequently passed through the at least one tube within the radiant section of the furnace to fully activate the catalyst material of the at least one tube.

In some embodiments, the concentration of hydrogen within the first reactant can be controlled to be within a pre-selected concentration range. For example, the first reactant can include a mixture of nitrogen and hydrogen and the hydrogen concentration can be in a range of 10 mole percent (mol%) and 20 mol% or a range of greater than 0 mol% and less than or equal to 25 mol%. The hydrogen concentration can be adjusted during a first phase of catalyst activation so that it is adjusted over time within a pre-selected range of suitable concentrations.

Also, the concentration of ammonia within the second reactant can be controlled to be within a pre-selected concentration range. For example, the second reactant can include a mixture of nitrogen and ammonia and the ammonia concentration can be in a range of 10 mole percent (mol%) and 20 mol% or a range of greater than 0 mol% and less than or equal to 25 mol%. The ammonia concentration can be adjusted during a second phase of catalyst activation so that it is adjusted over time within a pre-selected range of suitable concentrations. Also, as the ammonia is utilized in the second phase of catalyst activation, hydrogen and nitrogen may be formed during the activation process and can be present with the ammonia and nitrogen of the second reactant.

In some embodiments, the first level of catalyst activation can be determined based on a pre-selected set of criteria. The criteria can include a temperature profile and/or a concentration profile for hydrogen. The criteria may also (or alternatively) include a pre-selected time period.

In a second aspect, the feeding of the first reactant and the feeding of the second reactant can occur such that the catalyst material in an upstream portion of the at least one tube is fully activated, the catalyst material of the at least one pre-reactor is then fully activated, and then catalyst material in a downstream portion of the at least one tube is fully activated after the catalyst material of the at least one pre-reactor is fully activated and after the catalyst material in the upstream portion of the at least one tube is fully activated. In other embodiments, the process can be implemented so that another sequence of activation of different catalyst material can alternatively occur.

In a third aspect, the feeding of the second reactant comprising ammonia can occur such that the catalyst material in a downstream portion of the at least one tube is fully activated last. For example, the catalyst material in the downstream portion of the at least one tube can include iron (Fe) and/or nickel (Ni) and can be activated last after an upstream layer of catalyst material within the tube of the furnace and one or more of the pre-reactors that includes ruthenium (Ru) has been activated.

In a fourth aspect, the process can include mixing nitrogen with the ammonia of the second reactant so the second reactant has ammonia at a pre-selected ammonia concentration and/or the second reactant has a pre-selected flow rate.

In a fifth aspect, the process can include mixing nitrogen with the hydrogen of the first reactant so the first reactant has hydrogen at a pre-selected hydrogen concentration and/or the first reactant has a pre-selected flow rate.

In a sixth aspect, the at least one pre-reactor can include multiple pre-reactors that include a first pre-reactor and a second pre-reactor. The first pre-reactor can have catalyst material within a vessel of the first pre-reactor and the second pre-reactor can have catalyst material within a vessel of the second pre-reactor. The second pre-reactor can be downstream of the first pre-reactor such that the second pre-reactor is between the at least one tube of the furnace and the first pre-reactor.

The feeding of the first reactant can occur such that: (a) the catalyst material in an upstream portion of the at least one tube is fully activated, (b) the catalyst material of the second pre-reactor is fully activated; and (c) the catalyst material of the first pre-reactor is fully activated. The feeding of the second reactant can occur such that (d) the catalyst material in a downstream portion of the at least one tube is fully activated. In some embodiments, the catalyst material of the downstream portion of the at least one tube can have a higher activation temperature than the catalyst material of the upstream portion of the at least one tube. The catalyst material of the downstream portion of the at least one tube can a higher activation temperature than the catalyst material of the first pre-reactor in some embodiments as well. The catalyst material of the downstream portion of the at least one tube can also have a higher activation temperature than at least some of the catalyst material of the second pre-reactor.

In a seventh aspect, the feeding of the first reactant can also include recirculating the first reactant through the at least one tube and the at least one pre-reactor for a first period of time. The first period of time can be a first period of time of a first phase of catalyst activation, for example. This first period of time can be a pre-selected period of time that is defined by a pre-selected set of design criteria.

In an eighth aspect, the process can also include venting of the first reactant while the second reactant is beginning to be fed toward the at least one pre-reactor and the at least one tube in response to detecting the first level of catalyst activation. The venting can also be provided so that the second reactant that is output from the at least one tube during a second phase of the catalyst activation process is also vented (*e*.*g.*, is not recirculated).

In a ninth aspect, the process of the first aspect can include one or more features of the second aspect, third aspect, fourth aspect, fifth aspect, sixth aspect, seventh aspect, and/or eighth aspect to provide yet other embodiments. Also, other features can be utilized in embodiments of the process. Examples of such other features are discussed in connection with exemplary embodiments of the process provided herein.

In a tenth aspect, an apparatus for ammonia cracking that is configured to facilitate catalyst activation is provided. Embodiments of the apparatus can be configured to utilize an embodiment of the process for catalyst activation for ammonia cracking. The apparatus can include a furnace having at least one tube that includes catalyst material within the at least one tube for cracking of ammonia. The catalyst material within the at least one tube can have an upstream portion of catalyst material and a downstream portion of catalyst material. At least one pre-reactor can be positioned upstream of the at least one tube. The at least one tube can be in fluid communication with the at least one pre-reactor. The apparatus can be sized and configured so that a first reactant is feedable to the at least one pre-reactor and the at least one tube such that the first reactant is passed through catalyst material of the least one pre-reactor and subsequently passed through catalyst material of the at least one tube. Also, the apparatus can be sized and configured so that a second reactant is feedable to the at least one pre-reactor and the at least one tube such that, in response to detecting a first level of catalyst activation, the first reactant is ventable and the second reactant is feedable to the at least one pre-reactor and the at least one tube such that the second reactant is passable through the catalyst material of the least one pre-reactor and subsequently passable through the at least one tube to fully activate at least some of the catalyst material of the at least one tube.

Embodiments of the apparatus can also include other elements and features. For example, embodiments can include multiple heat exchangers positioned upstream of the pre-reactor(s) and/or one or more heat exchangers positioned between the pre-reactor(s) and the at least one tube of the furnace. As another example, embodiments can utilize a pump and/or compressor for facilitating a flow fluid.

In an eleventh aspect, the apparatus can be configured so that the feeding of the first reactant occurs so that the upstream portion of the catalyst material of the at least one tube is fully activated first and then the catalyst material of the at least one pre-reactor is fully activated. The second reactant can also be feedable to the at least one tube and the at least one pre-reactor such that the downstream portion of the catalyst material of the at least one tube is fully activated after the catalyst material of the at least one pre-reactor is fully activated and after the upstream portion of the catalyst material of the at least one tube is fully activated. For instance, in some embodiments the apparatus can be configured so that the feeding of the second reactant occurs such that the downstream portion of the catalyst material of the at least one tube is fully activated last.

In a twelfth aspect, the at least one pre-reactor of the apparatus can include multiple pre-reactors. The multiple pre-rectors can include a first pre-reactor having catalyst material within a vessel of the first pre-reactor and a second pre-reactor having catalyst material within a vessel of the second pre-reactor. The second pre-reactor can be downstream of the first pre-reactor such that the second pre-reactor is between the at least one tube of the furnace and the first pre-reactor. The apparatus can be configured so that the feeding of the first reactant occurs such that (a) the upstream portion of the catalyst material of the at least one tube is fully activated, (b) the catalyst material of the second pre-reactor is fully activated, and (c) the catalyst material of the first pre-reactor is fully activated. The feeding of the second reactant can also occur so that (d) the catalyst material in the downstream portion of the catalyst material of the at least one tube is fully activated. The downstream portion of the catalyst material of the at least one tube can have a higher activation temperature than the catalyst material of the upstream portion of the catalyst material of the at least one tube. The downstream portion of the catalyst material of the at least one tube can also have a higher activation temperature than the catalyst material of the first pre-reactor and the catalyst material of the downstream portion of the at least one tube can also have a higher activation temperature than at least some of the catalyst material of the second pre-reactor.

In a thirteenth aspect, the apparatus can include a reactant recirculation conduit arrangement positioned so that the first reactant is recirculatable from an outlet of the at least one tube to the at least one pre-reactor. The reactant recirculation conduit can be positioned and configured so that a compressor is able to receive some of the first reactant output from the at least one tube to compress it for recirculation of the first reactant back to the pre-reactor(s) and at least one tube of the furnace in some embodiments.

In a fourteenth aspect, an apparatus for ammonia cracking that is configured to facilitate catalyst activation can include a furnace having at least one tube that includes catalyst material within the at least one tube for cracking of ammonia wherein the catalyst material within the at least one tube has a more active portion of the catalyst material that is more active than a less active portion of the catalyst material. At least one pre-reactor can be positioned upstream of the at least one tube wherein the at least one tube can be in fluid communication with the at least one pre-reactor. The apparatus can be sized and configured so that a first reactant is feedable to the at least one pre-reactor and the at least one tube such that the first reactant is passed through catalyst material of the least one pre-reactor and subsequently passed through catalyst material of the at least one tube. A second reactant can also be feedable to the at least one pre-reactor and the at least one tube such that, in response to detecting a first level of catalyst activation, the first reactant is ventable and the second reactant is feedable to the at least one pre-reactor and the at least one tube such that the second reactant is passable through the catalyst material of the least one pre-reactor and subsequently passable through the at least one tube to fully activate the less active portion of the catalyst material of the at least one tube. Embodiments of the apparatus can include other features as well (*e.g.,* a recirculation conduit, heat exchangers, *etc.).*

In a fifteenth aspect, the apparatus of the tenth aspect or the apparatus of the fourteenth aspect can include one or more other features of the eleventh aspect, twelfth aspect, and/or thirteenth aspect to provide yet other embodiments. Also, other features can be utilized in embodiments of the apparatus. Examples of such other features are discussed in connection with exemplary embodiments of the apparatus provided herein.

In yet other embodiments of the apparatus and process, it is contemplated that only a single reactant that includes ammonia (*e.g.,* ammonia, ammonia mixed with nitrogen gas, *etc.)* may be used for catalyst activation. The ammonia that is utilized can be liquid ammonia that is vaporized, optionally mixed with nitrogen, and subsequently passed through pre-reactors and at least one tube having catalyst material therein positioned in a radiant section of a furnace for activation of catalyst material. The catalyst material activation can occur over a pre-selected period of time in accordance with a pre-selected scheme of activation to provide full activation of all catalyst material within the temperature ratings of the various equipment. Such activation can be provided *via* use of recirculation of at least some of the ammonia while also adding additional liquid ammonia into the reactant feed for providing catalyst activation and also controlling temperature at different pre-reactors/furnace tubes and heat exchangers to provide a sequence of catalyst activation so that a catalyst material having a highest activation temperature in the tube(s) of a furnace is activated last while other catalyst material is activated prior to that highest activation temperature catalyst material within the tube(s) of the furnace.

It should be appreciated that embodiments of the process and apparatus can utilize various conduit arrangements and process control elements. The embodiments may utilize sensors (e.g., pressure sensors, temperature sensors, flow rate sensors, concentration sensors, *etc.),* controllers, valves, piping, and other process control elements. Some embodiments can utilize an automated process control system and/or a distributed control system (DCS), for example. Various different conduit arrangements and process control systems can be utilized to meet a particular set of design criteria.

Ranges expressed as being "between" a first value "and" a second value include the first and second values. For example, the expression "between 600°C and 700°C" is equivalent to "in a range from 600°C to 700°C". Other ranges are to be interpreted accordingly.

Other details, objectives, and advantages of our apparatus for the activation of catalyst material utilized in ammonia cracking, process for the activation of catalyst material utilized in ammonia cracking, and methods of making and using the same will become apparent as the following description of certain exemplary embodiments thereof proceeds.

Exemplary embodiments of our apparatus for the activation of catalyst material utilized in ammonia cracking, process for the activation of catalyst material utilized in ammonia cracking, and methods of making and using the same are shown in the drawings included herewith. It should be understood that like reference characters used in the drawings may identify like components.

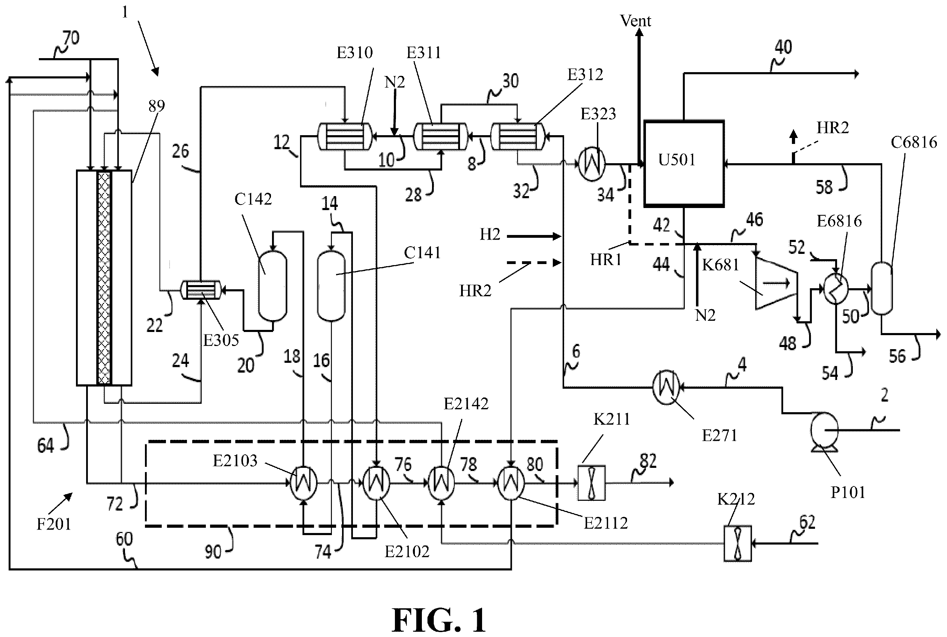

Figure 1 is a block diagram of a first exemplary embodiment of an apparatus configured for ammonia cracking that is also configured for activation of catalyst material utilized in the ammonia cracking. An exemplary embodiment of a process for activation of catalyst material utilized in ammonia cracking, can also be appreciated from Figure 1.

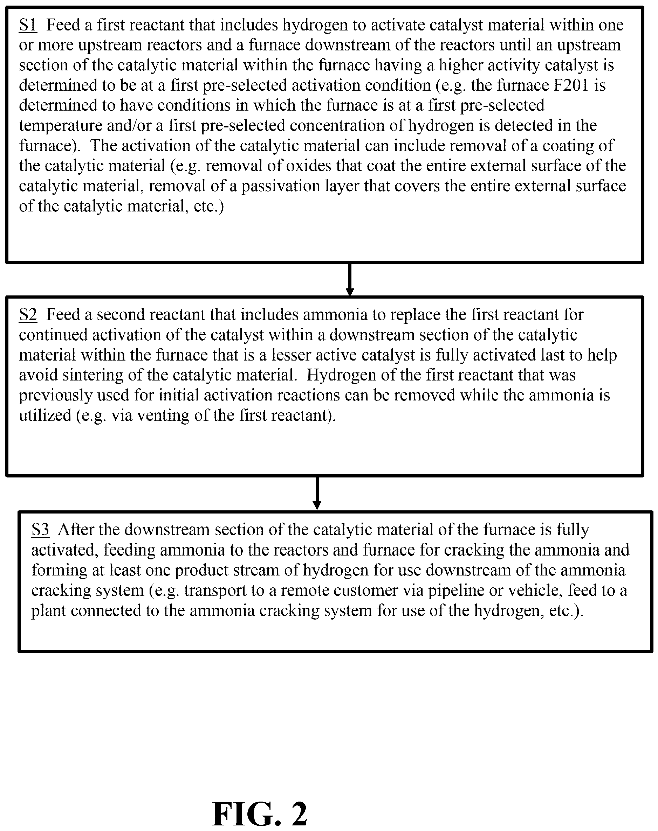

Figure 2 is a flow chart illustrating an exemplary embodiment of a process for activation of catalyst material utilized in ammonia cracking. The first exemplary embodiment of the apparatus for the activation of catalyst material utilized in ammonia cracking can implement this first exemplary embodiment of the process.

Referring to Figures 1-2, an apparatus 1 that is configured for ammonia cracking can include a number of process elements to receive ammonia (NH₃) and crack the ammonia to produce hydrogen and nitrogen gas. The formed hydrogen can then be separated from the nitrogen for producing a stream of hydrogen 40. For example, a feed of liquid ammonia 2 can be maintained in a storage device (*e.g.,* at least one ammonia storage tank) at an ammonia storage temperature (*e.g.,* -32°C, between -25°C and -40°C, *etc.).* The stored ammonia, which can be stored as liquid ammonia, can be removed from the storage device and fed to a pump P101 where it is pumped to produce a stream 4 of pressurized liquid ammonia at a pre-selected feed pressure (*e.g.,* 4.6 MPa, 4 MPa to 5 MPa, or other suitable feed pressure within a pre-selected feed pressure range). The pressurized feed stream 4 can be fed to a pre-heating heat exchanger E271, which can pre-heat the pressurized feed of ammonia to produce stream 6 of pre-heated liquid ammonia. In some embodiments, the pre-heating heat exchanger E271 can utilize a heat transfer fluid, which can be any suitable type of heat transfer fluid for pre-heating the liquid ammonia to a pre-selected pre-heated temperature (*e.g.,* a temperature of between 40°C and 60°C, a temperature of 45°C, *etc.).* In some embodiments, the heat transfer fluid can be or include a glycol (*e.g.,* a fluid having 55 wt. % ethylene glycol or propylene glycol). The pre-heating heat exchanger E271 can alternatively be (or also include) an electric heater to help ensure that the temperature of the heat transfer fluid fed to the heat exchanger E271 as a heating medium is at a sufficient temperature to pre-heat the liquid ammonia to the desired temperature.

The pre-heated feed stream 6 can undergo further pre-heating to further heat and vaporize the feed of ammonia *via* other pre-heating heat exchanges. One or more other pre-heating heat exchanges can be utilized, such as, for example heat exchangers E312, E311, E310, and E2102.

For example, the initially pre-heated ammonia feed stream 6 output from heat exchanger E271 can be further heated by heat exchange in heat exchanger E312 to produce a stream 8 of further heated liquid ammonia. The further heated liquid ammonia in stream 8 can then be evaporated *via* heat exchange in heat exchanger E311 to produce a stream 10 of gaseous ammonia, or ammonia vapor. The ammonia vapor in stream 10 can then be superheated by heat exchange in heat exchanger E310 to produce a heated ammonia gas stream 12 at a pre-selected pre-heated ammonia gas temperature (*e.g.,* a temperature of 260°C, a temperature of between 240°C and 280°C, *etc.).* The heated ammonia gas in stream 12 can then be further heated by heat exchange in heat exchanger E2102 to produce a stream 14 of superheated ammonia gas at a pre-selected superheated ammonia gas temperature (*e.g.,* a temperature of 420°C, a temperature of between 400°C and 450°C, *etc.).*

In conjunction with providing such pre-heating of the ammonia gas, each heat exchanger E310, E311, E312, and E2102 can have a pre-selected temperature rating that is specified to account for the pre-heating conditions that particular heat exchanger may be expected to experience during ammonia cracking operations and the availability of equipment that can meet those conditions. For example, heat exchanger E312 can have a temperature rating of between 100°C and 300°C, heat exchanger E311 can have a temperature rating of between 175°C and 450°C, heat exchanger E310 can have a temperature rating of between 330°C and 570°C, and heat exchanger E2102 can have a temperature rating of between 300°C and 500°C. Other embodiments may utilize other temperature profiles and have other heat exchangers of other suitable temperature ratings.

In some embodiments, there can be a single heat exchanger E2102 for providing the superheated ammonia gas. In other embodiments, the heat exchanger E2102 can output a heated ammonia gas stream for being fed to at least one other feed pre-heating heat exchanger to produce the stream 14 of superheated ammonia gas. There can also be at least one selective catalytic reactor (SCR) located in between heat exchanger E2102 and a second feed pre-heating heat exchanger downstream of heat exchanger E2102 or within a heat exchanger (*e.g.,* within heat exchange E2102) in some implementations. In some embodiments, the heat transfer fluid that may be utilized as the heating medium for the heat exchanger E2102 and/or other heat exchanger can be flue gas output from the furnace F201 of the apparatus 1.

Other embodiments can utilize a different arrangement of pre-heating heat exchangers to produce the superheated ammonia gas of stream 14. For example, less or more heat exchangers can be utilized to provide the formation of the superheated ammonia gas. The heat transfer fluids used for such heating can be any suitable heat transfer fluid that can function as a suitable heating medium for the heating of the ammonia to form the superheated ammonia gas of stream 14.

The superheated ammonia gas in stream 14 can be fed to one or more pre-reactors that are upstream of a furnace F201. The superheated ammonia gas stream feed temperature for feeding to the one or more pre-reactors can be a pre-selected superheated ammonia gas feed temperature (e.g., a temperature of 420°C, a temperature of between 400°C and 500°C, or a temperature between 400°C and 450°C, *etc.).* The superheated ammonia gas stream feed pressure can be a suitable pre-selected feed pressure, which can be less than the pressure at which the pump P101 output the stream 4 of pressurized liquid ammonia. For example, the pre-selected feed pressure for the superheated ammonia to be fed to one or more pre-reactors can be 4.3 MPa, between 4 MPa and 4.5 MPa, or other suitable pressure.

The upstream pre-reactors can include a first adiabatic reactor C141, or first pre-reactor C141, that can have a catalyst bed within the vessel of the reactor. The catalyst bed can include a suitable catalyst material. For instance, the catalyst material of the catalyst bed of the first adiabatic reactor C141 can be a bed of ruthenium-based catalyst or can be a bed of nickel-based catalyst. Other embodiments can alternatively use a first pre-reactor C141 that can utilize other catalyst material or a combination of catalyst material *(*e.g., a bed of an iron-based catalyst material, a bed of catalyst material having a combination of nickel and iron catalyst material, catalyst material that includes a combination of an upstream layer of catalyst material and a downstream layer of different catalyst material, *etc.).*

Some of the ammonia gas can be cracked as it is passed through this catalyst bed of the first pre-reactor C141 to form a first pre-reactor output stream 16 of intermediate gas that includes ammonia gas as well as some products of the partially cracked ammonia (*e.g.,* nitrogen and hydrogen gas). In some embodiments, the mole fraction of ammonia in the gas passing through the first adiabatic reactor vessel C141 can drop from about 100 mole percent (mol%) ammonia to about 90 mol% ammonia (*e.g*., about 10% of the ammonia can crack as it is passed through the first pre-reactor C141). In other embodiments, the mole fraction of the ammonia may differ (*e.g.,* can be between 95 mol% to 90 mol% ammonia or between 95 mol% and 80 mol%, *etc.).*

The first pre-reactor output stream 16 of intermediate gas can be output at a pre-selected temperature. This temperature can be, for example, about 360°C, between 320°C and 380°C, or another suitable temperature. This intermediate stream can subsequently be fed to a second pre-reactor C142, which can be a second adiabatic reactor C142, for example.

In some embodiments, the first pre-reactor output stream 16 of intermediate gas can undergo heating *via* a heat exchanger E2103 to produce a stream 18 of superheated intermediate gas before it is fed to the second adiabatic reactor C142, which can also be another type of second pre-reactor. For example, the first pre-reactor output stream 16 of intermediate gas can be heated to a pre-selected second pre-reactor feed temperature by being passed through heat exchanger E2103 before it is fed to the second adiabatic reactor C142. The second pre-selected second pre-reactor feed temperature can be a feed temperature of 590°C, *e.g.,* between 450°C and 620°C, or between 550°C and 610°C, or another suitable temperature for example. The intermediate gas pre-heating heat exchanger E2103 can utilize a suitable heat transfer fluid to provide the desired pre-heating (*e.g.,* exhaust gas or flue gas from furnace F201 or other heating medium). The stream 18 of superheated intermediate gas can be fed to a second pre-reactor C142 (*e.g.,* a second adiabatic reactor C142). The second pre-reactor can also include a vessel that has a bed that includes catalyst material. The catalyst material of the second pre-reactor C142 can be the same catalyst material of the first pre-reactor or include a different arrangement of catalyst material. For example, the second pre-reactor C142 can have a bed of catalyst material that includes an upstream layer of nickel-based catalyst and a downstream layer of a ruthenium-based catalyst. Other embodiments can alternatively utilize different combinations or catalyst material or a bed of a single type of catalyst material. For example, in some embodiments the second pre-reactor C142 can utilize a bed of catalyst material that only includes an iron-based catalyst, only includes a ruthenium-based catalyst, or includes a combination of a downstream layer of nickel-based catalyst and/or iron-based catalyst and an upstream layer of ruthenium-based catalyst.

The superheated intermediate gas can be passed through the second pre-reactor for additional pre-cracking of the ammonia of the intermediate gas to produce a furnace feed stream 20 of partially cracked ammonia gas. The mole fraction of ammonia in the gas output from the second pre-reactor C142 can be a pre-selected furnace feed concentration. For example, the mole fraction of ammonia in the furnace feed stream 20 can be 0.6 (*e.g.,* 60 mol% ammonia) or can be between 55 mol% ammonia and 75 mol% ammonia.

In the event ruthenium-based catalyst is used in both the first and second pre-reactors C141 and C142, the same type of catalyst can be used in both of the reactors or different ruthenium-based catalysts may be used. The type of catalyst material utilized in the first and second pre-reactors can be adapted to account for different design criteria or operational objectives as well. In some embodiments, the catalyst bed of the first pre-reactor C141 can be configured to provide a lower level of cracking of ammonia as compared to the catalyst bed of the second pre-reactor C142 that is positioned downstream of the first pre-reactor C141 and upstream of the furnace F201.

In some configurations, at least one of the pre-reactors can utilize a lower activity catalyst that has a lower activity for facilitating the cracking of ammonia as compared to a higher activity catalyst that has a higher activity for facilitating the cracking of ammonia. For example, ruthenium based catalyst can be a higher activity catalyst and nickel based catalyst or iron based catalyst can be a lower activity catalyst. The lower activity catalyst can have a higher full activation temperature than the higher activity catalyst as well.

In other embodiments, there may be only a single pre-reactor (*e.g.,* only a pre-reactor C141 or C142). In such an embodiment, the operational temperature for the single pre-reactor, catalyst material utilized in the pre-rector, and size of that pre-reactor may be adjusted to account for its use in providing a feed of partially cracked ammonia as a furnace feed stream 20 for further cracking in one or more tubes of the furnace F201. In such a configuration, the superheated ammonia gas stream feed temperature for feeding to the pre-reactors can be a pre-selected superheated ammonia gas feed temperature that may be higher than what may be selected for use in an arrangement having multiple pre-rectors (*e.g.,* a temperature of between 450°C and 600°C, or a temperature between 475°C and 550°C, *etc.)* for processing the ammonia therein for outputting the partially cracked ammonia in a furnace feed stream 20.

The partially cracked ammonia in furnace feed stream 20 can be heated by heat exchange in a heat exchanger E305 prior to being fed as a pre-heated furnace feed stream 22 at a pre-selected furnace feed temperature and pre-selected furnace feed pressure. The heating medium utilized in the heat exchanger E305 can be any suitable fluid (*e.g.,* hydrogen and/or nitrogen product gases output from the furnace F201 or other suitable heat transfer fluid). The pre-selected furnace feed pressure can be a suitable feed pressure (*e.g.,* a pressure of 3.8 MPa, a pressure of between 3 MPa and 4.1 MPa, *etc.).* The pre-selected furnace feed temperature can also be a suitable feed temperature (*e.g.,* a temperature of between 300°C and 500°C, or a temperature of 450°C, or 500°C, *etc.).* In some embodiments, the inlet feed temperature for the pre-heated furnace feed stream 22 can be limited to a pre-selected furnace feed temperature (*e.g.,* a temperature of 500°C, a temperature of between 400°C and 500°C, *etc.)* to help limit the inner wall temperature of the one or more ammonia cracking tubes through which the pre-heated furnace feed stream 22 can be passed into for the ammonia of that stream to undergo cracking within the furnace F201.

Heat exchanger E305 can also have a pre-selected temperature rating in some embodiments. For example, heat exchanger E305 can have a temperature rating of between 500°C and 700°C in some embodiments. The selected temperature rating for the heat exchanger E305 can be specified to account for the pre-heating conditions that this particular heat exchanger may be expected to experience during ammonia cracking operations and the availability of equipment that can meet those conditions. Other embodiments may utilize other temperature profiles and have other heat exchangers of other suitable temperature ratings.

The furnace F201 can include a combustion chamber and one or more catalyst-filled tubes that can be positioned in the radiant section 89 of the furnace F201, which can be considered a furnace reactor or a primary ammonia cracking reactor. The pre-heated furnace feed stream 22 can be passed through the one or more catalyst-filled tubes within the radiant section 89 of the furnace F201 to undergo ammonia cracking therein. At least one fuel can be combusted in a combustion chamber to generate flue gas *via* combustion of the fuel for heating the pre-heated furnace feed stream 22 that includes ammonia as well as hydrogen and nitrogen *(e.g., via* the pre-cracking of ammonia that can be provided by the one or more pre-reactors) to facilitate the cracking of the ammonia passed through the one or more catalyst-filled tubes of the furnace F201.

The catalyst material within the furnace F201 (*e.g.*, the catalyst material within the one or more catalyst-filled tubes, which can be tubes filled with the catalyst material or lined with the catalyst material, for example) can be positioned to help increase the amount of ammonia cracking that can be done using the heat from the burners of the furnace within the combustion chamber of the furnace by reducing the duty required to heat the partially cracked stream to the reaction temperature for ammonia cracking.

As noted above, the furnace F201 can include a combustion chamber that combusts at least one fuel for generating flue gas and heat to facilitate ammonia cracking within the furnace F201. In some configurations, a stream 62 of air or other oxidant (*e.g.,* oxygen-enriched air, *etc.)* can be passed through a forced draft fan K212 before being pre-heated by heat exchange in an oxidant pre-heating heat exchanger E2141 to produce a stream 64 of pre-heated oxidant. The pre-heated oxidant of stream 64 may be mixed with a stream 70 of fuel *(e.g.,* natural gas, hydrogen gas, a mixture of natural gas and hydrogen, *etc.)* fed to the burners (not shown) of the furnace F201 for combustion of the fuel within the combustion chamber of the furnace. Pre-heating the oxidant can help reduce the fuel needed to facilitate the combustion for generation of a desired level of heat for ammonia cracking.

The one or more tubes in the radiant section 89 of the furnace F201 can be filled with at least two types of ammonia cracking catalysts in multiple different layers that include an upstream layer positioned at and/or adjacent the inlet of the furnace F201 and a downstream layer positioned at and/or adjacent the outlet of the furnace through which the cracked ammonia products can be output. In some contemplated embodiments, the one or more tubes can also include at least one intermediate layer of catalyst material between the upstream layer of catalyst material and the downstream layer of catalyst material as well. In other embodiments, there may just be the upstream and downstream layers of catalyst material.

The upstream and downstream catalyst material in the one or more tubes in the radiant section 89 of the furnace F201 can have different activation temperature requirements. For example, the upstream layer can have an activation temperature requirement that is lower than the downstream layer of catalyst material. The catalyst material of the upstream layer can also be less active than the downstream layer in some embodiments (*e.g.,* the upstream layer can be a less active portion of the catalyst material of the furnace F201). In other embodiments, the catalyst material of the upstream layer can be more active than the downstream layer (*e.g.,* the upstream layer can be a more active portion of the catalyst material of the furnace F201 that is more active than a less active portion of the catalyst material of the furnace F201).For example, a ruthenium-based catalyst can be used in the first upstream layer of catalyst material within each tube of the furnace F201 so that a faster reaction rate can allow the metals temperature to be maintained within a pre-selected design limit (*e.g.,* a design limit of about 660°C, a design limit of between 600°C and 700°C, *etc.).* The second downstream layer of catalyst material in the one or more tubes of the furnace F201, downstream of the first layer of catalyst material, can include a lower cost but less active nickel-based catalyst or iron-based catalyst (*e.g.,* be an example of a less active portion of the catalyst material of the furnace F201 that is less active that the more active portion of the catalyst material of the furnace, which can be the Ru-based catalyst in the first upstream layer, *etc.).*

In other embodiments, the first upstream layer and second downstream layer of catalyst material within the one or more tubes of the furnace F201 can utilize other types of catalyst material. In some configurations, the upstream layer of catalyst material can have a lower activation temperature than the downstream layer of catalyst material and in other configurations that upstream layer of the catalyst material can have a higher activation temperature than a downstream layer. In yet other embodiments, the one or more tubes of the furnace F201 can have a single type of catalyst material therein.

The furnace F201 can be operated *via* combustion of fuel for heating the ammonia of the pre-heated furnace feed stream 22 fed into the one or more tubes for cracking the ammonia to produce hydrogen gas and also nitrogen gas. The furnace F201 can output at least one stream 24 of cracked gas, which can exit the radiant section 89 of the furnace F201 at a pre-selected outlet temperature (*e.g.,* a temperature of between 600°C and 750°C, or between 620°C and 700°C, *e.g.,* a temperature of 640°C, *etc.).* The cracked gas output from the furnace F201 can be fed to the heat exchanger E305 as a heating medium for pre-heating the furnace feed stream 20 that is output from the second pre-reactor C142. The cooled, cracked gas can be output from the heat exchanger E305 at a pre-selected cooled temperature. Such a temperature can be less than the temperature at which the gas was output from the furnace F201 (*e.g.*, between 450°C and 600°C, or between 500°C and 550°C, *etc.).* The cooled cracked gas can be output from the heat exchanger E305 for being fed to other heat exchanges to undergo additional cooling before the cracked gas is fed to a hydrogen recovery unit U501.

For example, a cooled stream 26 of cracked gas can be output from the heat exchanger E305 to be fed to heat exchanger E310 and subsequently fed to other heat exchangers E311 and E312 for use as a heating medium to heat the ammonia passed therethrough so that the cracked gas can be cooled toward a desired hydrogen recovery unit feed temperature.

For instance, the cooled cracked gas of stream 26 can be fed to the heat exchanger E310 to provide heating to superheat the ammonia gas, thereby further reducing the temperature of the cracked gas to cool it. A stream 28 of cracked gas can be output from the heat exchanger E310 to be fed from heat exchanger E310 to heat exchanger E311 to provide the duty to evaporate the further heated liquid ammonia fed therein *via* stream 8, thereby reducing the temperature of the cracked gas even further. A stream 30 of cracked gas can be output from heat exchanger E311 for being fed to heat exchanger E312 to provide the duty for further heating heated pressurized liquid ammonia of stream 6, thereby reducing the temperature of the cracked gas further again.

Each of the heat exchangers E305, E310, E311 and E312 are depicted in the exemplary embodiment of Figure 1 as an individual shell-and-tube style heat exchanger with the ammonia passing through the tubes and the cracked gas passing through the shell side. However, this arrangement could be reversed. Alternatively, the heat exchangers could be combined into a single shell-and-tube style heat exchanger or indeed a different style of heat exchanger could be used.

A stream 32 of cracked gas can be output from heat exchanger E312 for being fed to a hydrogen recovery unit U501 at a pre-selected hydrogen recovery unit feed temperature. For example, the heat exchanger E312 can output the cooled cracked gas to a heat exchanger E323 that can utilize a refrigerant or coolant (*e.g.,* cooling water, *etc.)* to facilitate further cooling of the cracked gas as may be desired to further cool the cracked gas to the pre-selected hydrogen recovery unit feed temperature. The cracked gas that is sufficiently cooled can then be output from the heat exchanger E323 for being fed as a hydrogen recovery feed stream 34 to the hydrogen recovery unit U501.

The hydrogen recovery unit U501 can be configured as a pressure swing adsorption (PSA) system in some embodiments. In other embodiments, another type of adsorption system can be utilized (*e.g.,* vacuum swing adsorption, temperature swing adsorption, *etc.).* In yet other embodiments, another type of hydrogen separation system can be utilized to separate the hydrogen of the cracked gas from the nitrogen gas and other constituents of the cracked gas.

The hydrogen recovery unit U501 can separate the hydrogen from the other constituents of the cracked gas to provide a hydrogen product stream 40 that can include hydrogen at a desired purity concentration (*e.g.,* 99 mol% hydrogen, or between 99 mol% and 100 mol% hydrogen, *etc.).*

The hydrogen recovery unit U501 can also output a stream 42, which can be off gas comprising the nitrogen gas, residual hydrogen gas and residual ammonia gas. The stream 42 may also include other minor constituents in some embodiments.

The hydrogen gas in stream 40 may be fed to a hydrogen liquefaction unit (not shown) to produce liquid hydrogen. In other embodiments, the hydrogen gas of stream 40 can be fed to at least one downstream plant process for use of the hydrogen gas. The off gas of stream 42 can be fed as a fuel stream 60 to the combustion chamber of the furnace F201 for combustion therein. Alternatively (or additionally), the stream 42 may be divided into multiple portions, one of which can be used as a fuel stream. In yet other embodiments, the stream 42 can be divided and none of the divided portions may be fed to the furnace F201 as a fuel stream 60 (*e.g.,* combustion for the furnace F201 can be provide just *via* fuel from the fuel stream 70).

For example, the stream 42 can be split so that a first portion 44 of the off gas in stream 42 is heated by heat exchange in a heat exchanger E2112 to produce a stream 60 of warmed off gas which is then fed to one or more burners in the furnace F201, together with air feed 64 and, optionally the fuel stream 70 (*e.g.,* natural gas feed stream, *etc.).* A minimum amount of natural gas or other suitable fuel for the fuel stream 70 can be used as trim fuel to provide the balance of fuel required in the fired section of the combustion chamber to supplement the ammonia and/or hydrogen present within the first portion 44 of the off gas fed to the furnace F201.

A second portion 46 of the off gas 42 (when utilized) can be sent to a compression system K681 (*e.g.,* a multistage compressor, a compressor assembly, *etc.)* for compression. The compression system K681 can have multiple stages with an intercooler between each stage, together with an aftercooler following the last stage. Heat can be recovered from the compressed gas in the intercoolers and the aftercooler by heat exchange with a heat transfer fluid. Heat may also be recovered from the lube oil and, where a positive displacement compression unit is used, from the cylinder(s) of the compression unit *via* the heat transfer fluid.

The intercoolers and aftercooler that can be utilized are indicated by a single heat exchanger E6816 in Figure 1, which can recover heat from a stream 48 of compressed off gas by heat exchange with a stream 52 of a heat transfer fluid to produce a stream 50 of cooled compressed off gas and a stream 54 of warmed heat transfer fluid that may be utilized in another process or heat exchanger (*e.g.,* heat exchanger E271, *etc.).* For example, the heat transfer fluid heated in the cooler E323 and in the intercoolers and aftercooler E6816 *etc.,* can be used to provide the duty for preheating the liquid ammonia by heat exchange in heat exchanger E271.

The cooled compressed off gas in stream 50 can be fed to a phase separator C6816 in which condensate can be removed as stream 56. The compressed off gas can then be recycled to the hydrogen recovery unit U501 as stream 58 to recover further hydrogen. In other embodiments, *t*he process can be operated without compression system K681 and use of the second portion 46 of the off gas being processed to be recycled back to the hydrogen recovery unit U501. Such an embodiment may result in lower hydrogen recovery in the hydrogen recovery unit U501. While reducing hydrogen recovery may result in less hydrogen gas product, the reduced hydrogen recovery may still be desirable as the carbon intensity (CI) for the process could be lowered as more hydrogen would be in the off gas thereby reducing the requirement for natural gas as trim fuel and reducing carbon dioxide emissions. Also, this type of arrangement may provide less overall power consumption due to the non-use of the compression system K681.

The furnace F201 can emit at least one stream 72 of flue gas. The emitted flue gas can be at a pre-selected flue gas emission temperature (*e.g.,* a temperature of between 650°C and 700°C, or a temperature of about 686°C, *etc.).* The stream 72 of flue gas can pass from the radiant section 89 of the furnace F201 to the convection section 90 of the furnace F201 where it can function as a heating medium as noted above. For example, the flue gas output from the furnace F201 can provide the duty for heating the intermediate gas from stream 16 in heat exchanger E2103 thereby reducing the temperature of the flue gas which can then be output from heat exchanger E2103 as a heating medium stream 74 for being fed to heat exchanger E2012 to provide the duty for the further heating of the heated ammonia gas from stream 12 in heat exchanger E2102 thereby reducing the temperature of the flue gas further. The flue gas can be routed to provide heating duty in a direction countercurrent to the flow of feed gas to the radiant section of the furnace F201.

The cooled flue gas can be output from the heat exchanger E2102 as a further cooled flue gas stream 76 for being fed to heat exchanger E2142 to provide the duty for heating the air from stream 62 in heat exchanger E2142 thereby reducing the temperature of the flue gas further. The further cooled flue gas can be output from heat exchanger E2142 as stream 78 to be fed to heat exchanger E2112 to provide the duty for pre-heating the first portion 44 of the off gas stream 42 in heat exchanger E2112 thereby cooling the flue gas further.

The cooled flue gas can be output from the convection section 90 of the direct fired tube furnace F201 as stream 80 at a pre-selected flue gas output temperature (*e.g.,* a temperature of over 100°C, a temperature of about 121°C, a temperature that is above the condensation point of water, or a temperature that is at or above a pre-selected acid dew point to avoid condensation of the acid, *etc.).* The cooled flue gas can be passed through an induced draft fan K211 for being emitted as an emissions stream 82 in some embodiments. Embodiments can be configured to utilize as much of the practical energy from the flue gas as economical for venting of the cooled flue gas to atmosphere. In some embodiments, the flue gas may first undergo other processing (*e.g.,* carbon dioxide capture, particulate removal processing, *etc.)* depending on its composition.

In some embodiments, oil may be present in the liquid ammonia in an amount up to about 5 ppm from boil-off gas compressors (not shown) used with ammonia storage tanks (not shown), either at the location where the ammonia is produced, or onsite where the ammonia is cracked, or indeed anywhere in transit between the two sites. In some configurations, it may be desirable to remove the oil before the ammonia is exposed to the catalysts in the pre-reactors and/or furnace F201. Oil may be removed by passing the ammonia through a bed of activated carbon or *via* one or more other types of oil removal processing units. If oil is to be removed from the ammonia, then an oil removal unit (not shown) may be located in stream 2 (*e.g.,* in the feed line to the pump P101), in stream 4 (*e.g.,* between pump P101 and heat exchanger E271), in stream 6 (*e.g.,* between heat exchanger E271 and heat exchanger E312), in stream 8 (*e.g.,* between heat exchangers E312 and E311), in stream 10 (*e.g.,* between heat exchangers E311 and E310), or other suitable location upstream of the pre-reactors and furnace F201.

The one or more tubes of the furnace F201 and/or pre-reactor(s) upstream of the furnace F201 can include catalyst materials to facilitate ammonia cracking. These catalyst materials can include a metal for promoting the ammonia cracking rection to crack ammonia into nitrogen and hydrogen gas, for example. The metal that can be included in the catalyst materials can include transition metals such those in Group 6 of the Periodic Table (*e.g.,* chromium (Cr) and molybdenum (Mo)); Group 8 of the Periodic Table *(e.g.*, iron (Fe), ruthenium (Ru) and osmium (Os); Group 9 of the Periodic Table (*e.g.,* cobalt (Co), rhodium (Rh) and iridium (Ir)); Group 10 of the Periodic Table (*e.g.,* nickel (Ni), palladium (Pd) and platinum (Pt)); and Group 11 of the Periodic table (*e.g.,* copper (Cu), silver (Ag) and gold (Au)). Metalloids (e.g., tellurium (Te), *etc*.) may also be used.

The activity of some of these metals as catalysts for ammonia cracking has been reported by Masel et al (Catalyst Letters, vol. 96, Nos 3-4, July 2004) to vary in the following order:
Ru> Ni > Rh > Co > Ir > Fe >> Pt > Cr > Pd > Cu >> Te
(wherein Ru is a more active catalyst and Te is a less active catalyst).

The metal(s) of the catalyst may be unsupported but are usually supported on a suitable support, (*e.g.,* a metal oxide support such as silica (SiO₂), alumina (Al₂O₃), zirconia (ZrO₂) or a mixed metal oxide support such as spinel (MgAl₂O₄) or perovskite (CaTiOs)). The activity of a supported metal catalyst can depend in part on the loading of the catalytically active metal on the support. In this regard, the loading of the metal can vary according to a pre-selected set of design criteria. In some implementations, the metal loading of catalyst material can be in a range from about 0.1 wt % to about 70 wt %. For instance, in some catalyst materials, the loading may be towards the lower end of the range *(e.g.,* from about 0.1 wt % to about 10 wt %, or from about 0.2 wt % to about 5 wt %, for the more active metals, *e.g.,* ruthenium) and for less active metals (*e.g.,* nickel), the loading may be towards the upper end of the range (e.g., from about 20 wt % to about 65 wt %, *etc.).*

Supported metal catalysts that may be utilized can be unpromoted or may be promoted with at least one other metal, *e.g.,* one or more Group 1 metals (*e.g.,* lithium (Li), sodium (Na) and potassium (K)); Group 2 metals (*e.g.,* magnesium (Mg) and calcium (Ca)), or Group 13 metals, (e.g., aluminum (Al)), to improve activity of the catalyst material.

Bimetallic catalysts, or catalysts containing two catalytically active metals, are also suitable for use with the present invention. Examples include the composite metal or metal alloys or metal nanoclusters supported on perovskites, composite oxides or nitrides, or mixed oxides or mixed nitrides disclosed in U.S. Patent Application Publication No. 2021/0001311A (*e.g.,* CoNi-MgSrCeO₄ and 1 wt % K-CoNi-MgSrCeO₄). Other types of multiple metal ammonia cracking catalysts may also be utilized.

Any number of suitable ammonia cracking catalysts can be used as catalyst material in embodiments of the apparatus and process. Examples of suitable catalyst materials are disclosed in U.S. Pat. App. Pub. No. 2015/0217278A and Lamb et al (Int. J. Hydrogen Energy, 44 (2019) pp 3726-3736) and Boisen et al (J. Catalysis 230 (2005) pp 309-312).

Before the operation of the apparatus 1 for ammonia cracking, catalyst material within the one or more tubes of the furnace F201 and/or one or more pre-reactors (*e.g.,* first and second pre-reactors C142 and C141 in embodiments that may utilize multiple pre-reactors) can be fully activated *via* a catalyst activation process. A catalyst material can be considered fully activated when the catalyst material has been sufficiently activated so that ammonia cracking can occur efficiently consistent with the pre-selected ammonia cracking design temperature of the apparatus 1 for ammonia cracking. For example, the catalyst material can be fully activated when the entirety of an oxide layer or passivation layer is removed from the catalyst material. As another example, the catalyst material can be fully activated when a substantial portion of an oxide layer or passivation layer is removed from the catalyst material I*(e.g.,* 55% to 100% of the passivation layer and/or oxides of the catalyst material is removed, or 75% to 100% of the passivation layer and/or oxides of the catalyst material is removed *etc.)* so that the ammonia cracking temperature needed for the ammonia cracking temperature can be substantially reduced within the pre-selected design parameters of the apparatus 1 for ammonia cracking. As yet another example, full activation of the catalyst material can occur when use of the catalyst used to facilitate ammonia cracking can be provided without any exotherm being provided *via* the catalyst material. As yet another example, full activation of the catalyst material can be obtained when use of the catalyst material to facilitate ammonia cracking can be provided without use of excessive temperature for the ammonia cracking reaction within the pre-selected temperature design limits of the apparatus 1. As yet another example, full activation of catalyst material can be detected when the catalyst material is activated sufficiently to allow the apparatus 1 for ammonia cracking to crack ammonia within its pre-selected design criteria. As yet another example, catalyst material can be fully activated when use of the catalyst for facilitating ammonia cracking can be provided without a significant level of exotherm from the catalyst occurring. A fully activated catalyst material can be positioned so that the catalyst material is in a suitable state (*e.g., via* at substantial removal of a passivation layer and/or a significant removal of oxides from the catalyst material, *etc.)* to facilitate ammonia cracking within an acceptable rate that can be defined by the pre-selected design criteria of the apparatus 1 for ammonia cracking. The detection of full activation of catalyst material can be provided *via* a monitoring of a pre-selected set of criteria that can include a pre-defined temperature profile and/or pre-defined reactant concentration profile during the catalyst activation process.

The catalyst activation process can be utilized at a start-up of processing (*e.g.,* after ammonia cracking facility installation, after a turnaround in which used catalyst material was replaced with fresh catalyst material, *etc.).* The activation process utilized for activation of the catalyst material can utilize the process elements of the ammonia cracking apparatus 1 before the ammonia cracking apparatus 1 is fed a larger feed of ammonia for production of hydrogen *via* ammonia cracking operations.

For example, in a first catalyst activation phase, hydrogen (H₂) can be fed as a first reactant into the apparatus for being fed to the pre-reactor(s) and furnace F201 to help facilitate activation of the catalyst materials within the tube(s) in the radiant section 89 of the furnace F201 and the pre-reactor(s) (*e.g.,* pre-reactor C141 and C142). In some configurations, the hydrogen H₂ can be fed to a conduit through which the ammonia will be passed during ammonia cracking operations for being pre-heated prior to being fed to the pre-reactors and furnace F201. For instance, the hydrogen H₂ can be fed to a pre-heating heat exchanger feed conduit through which the stream 6 of pre-heated liquid ammonia will be passed to heat exchange E312 when ammonia cracking operations are to occur.

The hydrogen H₂ can be fed as a mixture of hydrogen and nitrogen gas in some embodiments to provide a desired concentration of hydrogen as the first reactant gas during the first catalyst activation phase. The nitrogen can also be injected into the reactant gas as it passed to toward the pre-reactor(s) and furnace F201 *via* at least one nitrogen injection feed (N₂). The hydrogen reactant stream can be passed through heat exchangers to be pre-heated *via* the flue gas output from the combustion of fuel stream 70 that can occur *via* the combustion chamber of the furnace F201. The heat from the combusted fuel can provide pre-heating to the first reactant and also provide a source of heat for heating the catalyst material during the catalyst activation so that the temperature of the catalyst is increased in a desired sequenced way while the catalyst is also exposed to the reactant hydrogen gas for activation of the catalyst material.

For example, the flue gas output from the furnace F201 can be utilized as the heating medium for pre-heating the hydrogen reactant gas that is passed through one or more of the pre-heating heat exchangers (*e.g.,* heat exchanger E2102 or other heat exchangers). In some embodiments, the hydrogen reactant gas can be injected so it only passes into a subset of such heat exchangers depending on how much pre-heating of the hydrogen reactant may be needed to provide the desired heating of the catalyst material *via* the heated stream of the reactant gas.

The pre-heated hydrogen reactant gas can subsequently be fed to the first pre-reactor C141 for being passed through the bed of catalyst material in the vessel of that reactor. The hydrogen reactant gas as well as products from the catalyst activation reactions that can occur from oxides, an oxidated layer, or a passivation layer of the catalyst material reacting with the hydrogen of the reactant gas stream can be output from the first pre-rector C141, undergo heating in heat exchanger E2103 to heat the reactant stream to a desired second pre-reactor feed temperature for subsequently feeding the reactant stream to the second pre-reactor C142.

The pre-heated hydrogen reactant gas can subsequently be fed through the bed of catalyst material in the second pre-reactor C142 so that the hydrogen reactant gas as well as products from the catalyst activation reactions that can occur from the passivation layer or oxides of the catalyst material reacting with the hydrogen of the reactant gas stream can be subsequently output from the second pre-rector C142 to undergo heating in heat exchanger E305 to heat the reactant stream to a desired furnace feed temperature for subsequently feeding the reactant stream to the one or more tubes of the furnace F201 for activation of the catalyst material within the tube(s) of the radiant section 89 of the furnace F201. The first reactant gas and catalyst activation product elements formed *via* the catalyst activation process in which the first reactant gas (*e.g.,* hydrogen) reacts with the oxide(s) of the not yet fully activated catalyst material (*e.g.,* oxides of an oxidated layer, oxides of a passivation layer, *etc.)* can be performed in the first phase of catalyst activation so that the reactant gas is recirculated during the first phase of catalyst activation. For instance, the reactant gas and catalyst activation product elements therein can be output from the tube(s) of the radiant section 89 of the furnace F201 while also having undergone heating *via* the combustion of fuel in the furnace for subsequently being passed through heat exchangers E305, E310, E311, and/or E312 for pre-heating fresh and/or recycled reactant gas being fed toward the pre-reactors and furnace F201. The first reactant gas can then be passed through a knockout drum positioned upstream of the hydrogen recovery unit U501 to help remove water from the reactant gas that may be present *via* the activation process and subsequently can be passed through a reactant recirculation conduit arrangement for being recirculated back through the heat exchangers, pre-reactors and tube(s) of the furnace F201. The reactant recirculation conduit arrangement can be arranged and configured so that the recirculated reactant is passed through a first recirculation conduit segment HR1 that is positioned between a location upstream of the hydrogen recovery unit U501 to pass the first reactant gas to the compression system K681 for undergoing compression therein for being subsequently output for being recirculated to help account for pressure drop that can occur from the reactant gas passing through the different process elements. Nitrogen (N₂) can also be fed into the first reactant to increase the nitrogen concentration of the reactant gas and/or to help provide a desired flow rate for the reactant gas. For example, nitrogen can be mixed with the hydrogen of the first reactant to provide the first reactant at a pre-selected flow rate and/or to provide a pre-selected concentration of hydrogen within the first reactant being utilized for the first phase of catalyst activation.

Some of the reactant gas can be vented *via* a vent stream (Vent) as may be needed during the recirculation of the reactant gas to account for a desired hydrogen concentration within the reactant gas or a desired temperature profile and/or removal of undesired constituents (*e.g.,* reduce the water content within the reactant gas, *etc.).* Venting can permit water that may collect in the reactant gas to be removed *via* the venting. Also, fresh hydrogen gas H₂ and/or nitrogen (N₂) can be injected into the recirculating reactant gas during the first catalyst activation phase as well to provide a makeup for hydrogen and/or nitrogen to account for venting and/or the hydrogen reacting with the oxides, oxidation layer(s) and/or passivation layer(s) of the catalyst materials in the furnace F201 and pre-reactor(s) (*e.g.,* pre-reactors C141 and C142) that can occur while those materials have not yet been fully activated.

After the reactant gas is increased in pressure *via* compression of the compression system K681, the output reactant gas being recirculated can have a higher pressure and can be passed through the phase separator C6816. Moisture (*e.g.,* water) can be removed as a liquid stream 56 *via* the phase separator and the reactant gas can subsequently be output as stream 58 for being fed to a second reactant recirculation conduit segment HR2 that has an inlet positioned between the phase separator C6816 and hydrogen recovery unit and an outlet in fluid communication with a conduit through which the reactant gas can be passed for being directed to the heat exchangers, pre-reactor(s), and furnace F201. For instance, the outlet of the second reactant recirculation conduit segment HR2 can be fed at a location where nitrogen (N₂) can be injected upstream of one or more heat exchangers (*e.g.,* upstream of heat exchanger E312, E311, and/or E310) or at another location that is upstream of the pre-reactor(s) and also upstream of the furnace F201 for being passed through one or more of the heat exchangers, pre-reactor(s) and tube(s) of the furnace F201.

After a first level of catalyst activation is detected, the catalyst activation process can be adjusted to transition to and subsequently initiate a second phase of catalyst activation for completion of the catalyst activation process. In some embodiments, the first level of catalyst activation can be pre-selected or pre-defined such that the catalyst material of the pre-reactor(s) is fully activated during the first level of catalyst activation. Also, the first level of catalyst activation can be pre-selected or pre-defined such that the catalyst material of the higher activity catalyst material in the tube(s) of the furnace F201 can be fully activated (*e.g.,* upstream layer of the catalyst material of the tube(s) of the furnace F201 in embodiments where the upstream layer includes a higher activity catalyst material I*(e.g.,* Ru-based catalyst material) and the downstream layer includes a lower activity catalyst material (*e.g.,* Ni-based catalyst material), *etc.).* The first level of catalyst activation can be pre-defined or pre-selected such that at least one layer of catalyst material of the furnace F201 is not yet fully activated and needs additional activation to be fully activated.

In some embodiments, one or more sensors can collect data (*e.g.,* temperature data, hydrogen concentration data, *etc.)* to detect the first level of catalyst activation as having occurred to indicate the first phase of catalyst activation has been reached and it is appropriate to transition to the second phase of catalyst activation. For example, a detection of a first pre-selected temperature profile and/or hydrogen concentration as being present in the furnace F201 that can be provided *via* one or more sensors of the furnace F201 or apparatus 1 can be utilized to determine that the first level of catalyst activation has occurred. Such a detection can be facilitated by a controller or control device communicatively connected to one or more such sensors receiving the sensor data and providing output to a user to indicate the pre-selected first level of catalyst activation has occurred, for example.

An example of a first level of catalyst activation that is detected can include a detection of a temperature of at between 150°C and 500°C at an outlet region or outlet of the radiant section 89 of the furnace F201, a duration of time of exposure to the hydrogen first reactant of between 1 hour and 48 hours, and/or a detected hydrogen concentration at the outlet of the tube(s) of the furnace having the upstream and downstream layers of catalyst material being at or above 10 mol%. (e.g., between 10 mol% and 30 mol%, between 10 mol% and 20 mol%, between 10 mol% and 25 mol%, *etc.).* A first level of catalyst activation can also (or alternatively) be detected based on monitoring of exotherms within the design constraints of the apparatus 1. One or more exotherm conditions that can be monitored can include, for example, detecting a temperature rise over a pre-selected period of time during the first catalyst activation phase that is greater than a pre-selected temperature rise (*e.g.*, a temperature increase of between 5°C and 50°C over a pre-selected period of time during the first catalyst activation phase, a temperature increase of 15°C over a pre-selected period of time during the first catalyst activation phase, a temperature increase of between 5°C and 15°C over a pre-selected period of time during the first catalyst activation phase, a temperature increase of 3°C and 12°C over a pre-selected period of time during the first catalyst activation phase, *etc.*)*.*

Other embodiments can utilize other pre-determined criteria to facilitate detection of the first level of catalyst activation for use in triggering a transition from the first phase of catalyst activation to a second phase of catalyst activation, which can occur immediately after the first phase is completed such that the adjustment from the first phase of catalyst activation to the second phase of catalyst activation occurs directly after the transition from the first phase of catalyst activation to the second phase of catalyst activation.

For example, in response to detection of this first level of catalyst activation, a second phase of catalyst activation can be initiated to continue the catalyst activation process. For example, such a catalyst activation phase transition can occur after the temperature of the tube(s) in the radiant section 89 of the furnace F201 is at a temperature in a range of 300°C to 550°C and/or the hydrogen concentration is detected as being at a concentration within a range of 20 to 25 mol% or 15 to 25 mol%, for example. As another example, detection of a temperature of the flue gas being output from the radiant section 89 of the furnace F201 that is at 400°C, 450°C, 500°C, or other temperature in a range of 400°C to 500°C can be utilized to detect the first level of catalyst activation and trigger a transition to the second phase of catalyst activation. As another example, detection of a temperature of the reactant gas (with reactant/catalyst material reaction products that can include water, *etc.)* being output from the tube(s) of the radiant section 89 of the furnace F201 that is at 400°C, 450°C, 500°C, or other temperature in a range of 400°C to 500°C can be utilized to detect the first level of catalyst activation and trigger a transition to the second phase of catalyst activation.

As yet another example for detection of the first level of catalyst activation being met, a pre-selected temperature threshold for a particular location (*e.g.,* outlet region of the radiant section 89 of the furnace, *etc.)* can be selected based on a temperature rating of heat exchangers upstream of the furnace F201 for preheating the ammonia feed to be fed to the tube(s) of the furnace F201 for ammonia cracking operations and/or an SCR that can be utilized upstream of the furnace F201 for preheating of the ammonia feed that is to be fed to the tube(s) of the furnace F201 for cracking of the ammonia. The temperature that is selected to facilitate detection of the first level of catalyst activation being met for transitioning from the first phase of catalyst activation to the second phase of catalyst activation can be selected to avoid a temperature of this equipment being at its temperature rating, exceeding its temperature rating, or being within a pre-selected variance of its temperature rating (e.g., being 15°C or 20°C less than its temperature rating), for example. Such a temperature selection profile can be utilized to help avoid that equipment being at or exceeding its designed temperature rating during the catalyst activation process that can be used to fully activate all the catalyst material of the tube(s) of the furnace F201 and pre-reactor(s) upstream of the furnace.

Of course (and as noted above and elsewhere herein), other first pre-selected catalyst activation temperature profiles and/or first pre-selected catalyst activation hydrogen concentrations can be used as well to pre-define the first level of catalyst activation to be obtained *via* the first phase of catalyst activation. The selection of the temperature profile, reactant concentration, and/or other parameters (*e.g.,* exotherm related parameters) that can be utilized can depend on the sizing of the tube(s) of the furnace F201 having the catalyst material, the size and number of the pre-reactors having the catalyst material, the types of catalyst material being activated, and temperature ratings of different equipment of the apparatus 1, for example.

The second phase of catalyst activation can be initiated by cessation of feeding of hydrogen (or other first reactant gas) into the pre-reactors and furnace F201 and initiation of feeding ammonia as a second reactant to the pre-reactors and furnace catalyst material. For example, a feed of liquid ammonia 2 can be passed toward the pre-heating heat exchanges, pre-reactors and furnace *via* the pump P101 being initiated for feeding the ammonia as the second reactant. In some embodiments, nitrogen can be mixed with the ammonia to dilute the ammonia concentration in the feed of ammonia that is passed as the second reactant to the pre-reactor(s) and furnace F201. For example, nitrogen can be mixed with the ammonia to provide a desired flow rate for the second reactant as the second reactant is passed through the pre-reactor(s) and catalyst material containing tube(s) of the furnace F201. For example, nitrogen can be mixed with the ammonia of the second reactant to provide the second reactant at a pre-selected flow rate and/or to provide a pre-selected concentration of ammonia within the second reactant being utilized for the second phase of catalyst activation.

Also, further feeding of hydrogen H₂ as the first reactant can be stopped and the hydrogen that had been fed and/or was being recirculated *via* the reactant recirculation conduit arrangement can be stopped *via* venting of the hydrogen reactant with the catalyst activation reaction products included therein *via* at least one vent conduit for providing at least one vent stream (Vent). The venting of the hydrogen reactant stream utilized and/or recirculated can be vented so the reactant gas stream utilized during the initial first catalyst activation phase does not directly mix with the ammonia fed into the apparatus *via* as feed of liquid ammonia 2 for the second phase of catalyst activation. The venting of the hydrogen reactant gas, however, can be performed so that the hydrogen gas is passed through the heat exchangers E305, E310, E311, and E312 to pre-heat the ammonia. Flue gas from the furnace F201 can also be utilized to pre-heat the ammonia *via* heat exchangers E2103 and E2012 as well as the oxidant pre-heating heat exchanger E2142 for controlling the temperature of the ammonia reactant gas that is utilized during the second phase of catalyst activation as well.

The feed rate of ammonia provided as the feed of liquid ammonia as the second reactant for the second phase of catalyst activation can be a substantially lower feed rate than the feed of liquid ammonia 2 provided during ammonia cracking operations. For example, the feed rate of ammonia for the second phase of catalyst activation can be between 5% and 45%, or between 20% and 40% of the typical designed feed rate for the feed of liquid ammonia for ammonia cracking operations for the apparatus 1. After the hydrogen reactant gas has been sufficiently vented, the ammonia that is utilized as the reactant for the second phase of catalyst activation can be vented *via* the vent conduit (Vent) upstream of the hydrogen recovery unit so that the ammonia used in the second phase of the catalyst activation is not recirculated (e.g., is used in once through processing so the ammonia makes a single pass through the pre-reactor(s) and furnace F201 and is not recirculated).

In other embodiments, it is contemplated that the ammonia could, instead, also be recirculated to further limit the amount of ammonia feed needed for the second phase of catalyst activation. In such an embodiment, it is contemplated that the recirculation of the ammonia can also utilize the reactant recirculation conduit arrangement to provide recirculation of the ammonia similarly to how the first reactant gas that includes hydrogen can be recirculated.

As may be appreciated from the above, the feed of liquid ammonia 2 fed to the apparatus for the second phase of catalyst activation can be passed through pre-heating heat exchangers E312, E311, E310 and E2102 for being pre-heated to a desired temperature for subsequently being fed to the first pre-reactor C141. Fresh ammonia from a source of liquid ammonia (*e.g.,* a storage vessel or storage unit of liquid ammonia) can be provided for continued operation of the second phase of catalyst activation so that the cooler, liquid ammonia can provide a heat sink that can help keep the various upstream pre-heating heat exchangers (*e.g.,* heat exchangers E310, E311, E312, *etc.)* below a pre-selected temperature (*e.g.,* avoid over heating of the heat exchangers beyond a design temperature specification).

The pre-heated ammonia reactant can be pre-heated so the ammonia is vaporized and is gaseous before being fed to the first pre-reactor C141 *via* the pre-heating heat exchanger(s). The ammonia reactant gas can subsequently be fed to the first pre-reactor C141 for being passed through the bed of catalyst material in the vessel of that reactor. The ammonia can react with the catalyst material therein and be partially cracked therein due to the full activation of that catalyst material (*e.g.,* the ammonia can be converted into some hydrogen and nitrogen as well as other components *via* reacting with the catalyst material in the first pre-reactor). The ammonia reactant gas as well as products from the catalyst reactions that can occur can be output from the first pre-rector C141, undergo heating in heat exchanger E2103 to heat the ammonia reactant stream to a desired second pre-reactor feed temperature for subsequently feeding the reactant stream to the second pre-reactor C142.

The pre-heated ammonia reactant gas can subsequently be fed through the bed of catalyst material in the second pre-reactor C142 so that the ammonia reactant gas as well as products (*e.g.,* hydrogen and nitrogen) from the reactions that can occur from the ammonia interacting with the catalyst material of the second pre-rector C142 can be output from the second pre-reactor C142 and fed to heat exchanger E305 to heat the ammonia reactant stream to a desired furnace feed temperature for subsequently feeding the reactant stream to the one or more tubes of the furnace F201 for activation of the catalyst material within the tube(s) of the radiant section 89 of the furnace F201. The second reactant gas and catalyst activation product elements (*e.g.,* nitrogen and hydrogen) formed *via* the catalyst activation process in which the reactant gas (*e.g.,* ammonia) interacts with the catalyst materials can be performed in the second phase of catalyst activation so that the reactant gas is passed through the tube(s) of the furnace F201. The ammonia and reaction products (*e.g.,* nitrogen and hydrogen) can be passed through the furnace tube(s) to help fully activate the less active catalyst material layer within the tube(s) (*e.g.,* the downstream layer where the downstream layer is Ni-based catalyst material and the upstream layer is Ru-based catalyst material) that have not yet been fully activated. The ammonia reactant gas and product elements can then be output from the radiant section 89 of the furnace F201 while the flue gas can also be output from the radiant section 89 for being fed to a convention section 90 of the furnace F201 for being passed through different heat exchangers E2103, E2102, E2142 and/or E2112.

For instance, the ammonia reactant gas and catalyst activation product elements therein can be output from the tube(s) of the radiant section 89 of the furnace F201 while also having undergone heating *via* the combustion of fuel in the furnace for subsequently being passed through heat exchangers E305, E310, E311, and/or E312 for pre-heating fresh ammonia reactant gas. The ammonia reactant gas can then be vented upstream of the hydrogen recovery unit U501 after being output from heat exchanger E312.

Alternatively, in embodiments where the ammonia may be recirculated, the ammonia reactant gas and activation products can be passed through a reactant recirculation conduit arrangement for being recirculated back through the heat exchangers, pre-reactors and tube(s) of the furnace F201. In such embodiments that may utilize ammonia recirculation, the reactant recirculation conduit arrangement can be arranged so that the recirculated second reactant (as well as products from the catalyst activation reaction some of the ammonia may have with the catalyst materials that may be present therein) is passed through the compression system K681*via* a first reactant recirculation conduit segment HR1 that can pass the first reactant from a location upstream of the hydrogen recovery unit U501 to pass through a feed conduit for the compression system K681 for undergoing compression therein for being subsequently output for being recirculated to help account for pressure drop that can occur from the reactant gas passing through the different process elements. Reactant gas recirculation conduit HR2 can be arranged to facilitate the routing of the compressed reactant gas output from the compression system K681 for being recirculated back to the pre-heating heat exchangers in such an embodiment as well, for example (*e.g.,* can recirculate the compressed ammonia so it is passed through the phase separator C6816 and subsequently redirected back toward the heat exchangers and/or pre-reactors *via* the second reactant recirculation conduit segment HR2 at a location that is between the hydrogen recovery unit U501 and the phase separator).

The feed rate of the feed of liquid ammonia 2 can be adjusted to account for the recirculation of the ammonia reactant gas as well (in the event recirculation of ammonia is utilized). And there can be periodic venting of the ammonia reactant gas *via* at least one vent stream (Vent) during the second phase of catalyst activation to account for one or more parameters of a pre-selected control criteria in the event at least some of the ammonia is recycled instead of being vented in a once through processing scheme.

The ammonia can be passed through the first pre-reactor C141, second pre-reactor C142, and tube(s) of the radiant section 89 of the furnace F201 during the second phase of catalyst activation to provide sequenced heating of the catalyst material therein to provide a pre-selected sequence of full catalyst activation. For instance, the heating of the catalyst material can be provided *via* the passing of the heated ammonia gas, which can be heated *via* the combustion of fuel in the furnace F201, so that the least active catalyst material in the tube(s) of the furnace is fully activated last. For example, where the downstream layer of catalyst material in the tube(s) of the furnace F201 is Ni-based and the upstream layer of the catalyst material is Ru-based, the downstream Ni-based catalyst material can be fully activated last during the second phase of catalyst activation *via* the use of the ammonia reactant gas.

In some embodiments, the heating of the catalyst material can be more directly provided *via* the feeding of the heated second reactant that includes ammonia gas during the second phase of catalyst activation and the feeding of the first reactant that includes hydrogen used in the first phase of catalyst activation such that a more active upstream layer of catalyst material in the tube(s) of the furnace F201 is fully activated first, a layer of catalyst material of the second pre-reactor C142 that is more active than a less active layer of catalyst material of the second pre-reactor is fully activated second, the catalyst material of the first pre-reactor C141 is fully activated third, the less active layer of catalyst material of the second pre-reactor C142 is fully activated fourth, and a less active downstream layer of catalyst material in the tube(s) of the furnace F201 is fully activated last.

The heating of the catalyst material provided *via* the first and second reactants can be primarily driven *via* the heat of the flue gas of the furnace F201, which can heat fluid in the tube(s) of the furnace in the radiant section 89 and also be used as a heating medium in one or more pre-heating heat exchangers. Also, the heating of a reactant passed through the tube(s) of the furnace F201 can be further utilized in providing pre-heating of the reactant as that output reactant stream is passed through heat exchangers E305, E310, E311, and E312 *etc.* The combustion of fuel in the furnace F201 can be considered a major source of the heating provided *via* the catalyst activation during the first and second catalyst activation phases.

Such feeding of the first and second reactants *via* the first and second catalyst activation phasing can be performed so that a more active layer of catalyst material in the tube(s) of the furnace F201 is fully activated first, a more active layer of catalyst material of the second pre-reactor C142 that is more active than a less active layer of catalyst material of the second pre-reactor is fully activated second, the catalyst material of the first pre-reactor C141 is fully activated third, and the less active layer of catalyst material of the second pre-reactor C142 is fully activated fourth in the first phase of catalyst activation using the first reactant. Then the less active layer of catalyst material in the tube(s) of the furnace F201 can be fully activated last *via* the second reactant that includes ammonia *via* the second phase of catalyst activation. In embodiments where the less active layer of catalyst material in the tube(s) of the furnace is the downstream layer, this would result in the downstream layer of the catalyst material in the tube(s) of the furnace F201 being fully activated last.

In some embodiments, it is contemplated that there may only be a single pre-reactor or more than two pre-reactors. In such embodiments, the first and second phases of catalyst activation can occur so that the more active layer of catalyst material in the tube(s) of the furnace F201 is activated first (*e.g.,* the upstream layer when the upstream layer of catalyst material is Ru-based catalyst and the downstream layer of catalyst material is Ni-based catalyst). Then, the pre-reactors can have their catalyst material activated in a sequenced manner before the downstream layer of catalyst material that is a less active layer of catalyst material in the tube(s) of the furnace F201 is finally activated. If there is only one pre-reactor, the first and second phases of catalyst activation can occur so that a more active catalyst material in the tube(s) of the furnace is activated first, the single pre-reactor's catalyst material can be activated second, and then the less active layer of catalyst material of the tube(s) of the furnace F201 can be activated last (e.g., the downstream layer of the tube(s) of the furnace F201 can be fully activated last when that Ni-based catalyst is the downstream layer and the Ru-based catalyst is the upstream layer in the furnace tube(s)).

As another example, in embodiments where there may be three pre-reactors, the first and second phases of catalyst activation can occur so that the downstream-most pre-reactor of the group of pre-reactors can have its catalyst material activated first, then the pre-reactor that is downstream of a first pre-reactor can have its catalyst material activated second, and the upstream most pre-reactor can have its catalyst material activated next and then the downstream layer of catalyst material of the tube(s) of the furnace F201 can be activated to complete the second phase of catalyst activation.

The sequencing of the activation of the different catalyst material in the downstream and upstream layers of catalyst material in the furnace tube(s), as well as the catalyst material of the pre-reactors can be configured to occur so those elements reach different higher temperatures over a period of time at a desired activation rate that is set to facilitate full activation of the catalyst material without causing sintering of the catalyst material. The overall temperatures for each reactor and the furnace that is desired for the targeted, sequenced catalyst activation can depend upon the type of catalyst material utilized. In some embodiments, the temperature profiles can be controlled so that the higher temperature points for the different elements matches the desired sequencing for catalyst activation. For instance, the upstream portion of the furnace F201 may reach a desired final activation temperature first for full activation of that upstream portion of the catalyst material within the tube(s) of the radiant section 89 of the furnace F201. Then, the temperature of the second pre-reactor C142 can reach a desired final activation temperature for full activation of the catalyst material of that pre-reactor. Next, the first pre-reactor C141 can reach a desired final activation temperature for full activation of the catalyst material of that pre-reactor. Finally, the temperature of the downstream portion of the tube(s) of the radiant section having the second downstream layer of catalyst material can reach its desired final activation temperature for full activation of the catalyst material. In such embodiments, the temperature for the downstream portion of the catalyst material of the furnace tube(s) can be higher than the other activation temperatures (*e.g.,* can be between 500°C and 700°C, or between 600°C and 650°C, *etc.).* The other activation temperatures can be about the same or vary between different desired temperatures *(e.g.,* the temperatures can vary between 300°C and 500°C, or between 350°C and 450°C, *etc.).*

Figure 2 also illustrates an exemplary embodiment of the catalyst activation process that can include first and second catalyst activation phases. As may be seen from Figure 2, in a first step S1, hydrogen or other first reactant can be fed to activate catalyst material within upstream reactors (*e.g.,* pre-reactors C141 and C142) and a furnace (*e.g.,* furnace F201) downstream of the reactors. The hydrogen can be fed during the first catalyst activation phase of the first step S1 until an upstream section of the catalyst material within the furnace F201 is determined to be at a first pre-selected activation condition (*e.g.,* the furnace F201 is determined to have conditions in which the furnace is at a first pre-selected temperature and/or a first pre-selected concentration of hydrogen is detected in one or more tubes of the radiant section 89 of the furnace F201, *etc.).* The full activation of the catalyst material can include removal of a coating of the catalytic material (*e.g.,* complete removal of oxides that coat the entire external surfaces of the catalytic material, complete removal of a passivation layer that covers the entire external surfaces of the catalytic material, *etc.).*

In a second step S2, ammonia can be fed to the apparatus as a second reactant for being directed to the furnace and upstream reactor(s) (*e.g.,* pre-reactor C141, pre-reactor C142, *etc.)* as a reactant to replace the first reactant (*e.g.,* hydrogen) for continued activation of the catalyst material within the furnace downstream of the reactors so that a less active catalyst within the furnace can be fully activated.

In some embodiments, the feeding of the first reactant that includes hydrogen in the first step S1 and the feeding of the second reactant that includes ammonia in the second step S2 can be performed such that the more active portion of the catalyst material within the furnace is fully activated first, the more active catalytic material within a second reactor (e*.g.,* second pre-rector C142) of the upstream reactors that is downstream of a first reactor (*e.g.,* first pre-reactor C141) of the upstream reactors is fully activated second, the catalytic material within the first reactor of the upstream reactors is fully activated third, a less active catalytic material within the second rector is activated fourth and a less active portion of the catalytic material within the furnace is fully activated last. The ammonia can be fed as pure ammonia or as ammonia that is diluted with a nitrogen and can be utilized in the second step S2 to fully activate the less active portion of the catalytic material within the furnace. The first step S1 can be performed to fully activate the other catalyst materials (*e.g.*, the more active portion of the catalyst material within the furnace is fully activated *via* the first step S1, the more active catalytic material within a second reactor (*e.g.,* second pre-rector C142) of the upstream reactors that is downstream of a first reactor *(*e.g., first pre-reactor C141) of the upstream reactors is fully activated second *via* the first step S1, the catalytic material within the first reactor of the upstream reactors is fully activated third *via* the first step S1, and a less active catalytic material within the second rector is activated fourth *via* the first step S1).

In yet other embodiments, the feeding of a first reactant that includes hydrogen can occur so that catalytic material within one or more pre-reactors occurs first in a first step and that a furnace having tube(s) with a lesser active catalyst material is fully activated last *via* feeding of a second reactant that includes ammonia in a second step S2.

In other embodiments, the feeding of the first reactant can be performed to fully activate catalyst material in one or more pre-reactors first and, when present, a more active catalyst material in the tube(s) of the furnace. Then, a second reactant can be fed to the pre-reactor(s) and furnace tube(s) to fully activate the lesser active catalyst last in the tube(s) of the furnace to complete full catalyst activation of the catalyst material. Then, a third step S3 can be performed for ammonia cracking operations.

As noted above, it is contemplated that in some embodiments the feeding of ammonia can also include recirculating the ammonia reagent of the second reactant to the reactors and furnace as well as other elements (*e.g.,* heat exchangers) for catalyst activation. The application of heat and the feeding of ammonia can be provided during the second step S2 so that full activation of the furnace and reactor catalytic material can occur in a pre-defined sequence *via* the feeding of the ammonia to help avoid sintering of the catalytic material. Also, as noted above, the first reactant that includes hydrogen that was previously used for initial first phase of the catalyst activation can be removed while the second reactant that includes ammonia is utilized (*e.g., via* venting of the first reactant) for the transition between the first and second phases of catalyst activation.

In a third step S3, after the downstream section of the catalytic material of the furnace that can have the less active catalytic material (*e.g.,* downstream portion of the catalyst material of the tube(s) of the radiant section 89 of furnace F201 when the downstream portion of catalyst material includes Ni-based catalyst that is less active than an upstream portion of the catalyst material that includes Ru-based catalyst) is fully activated, ammonia can be fed to the reactors and furnace for cracking the ammonia and forming at least one product stream of hydrogen for use downstream of the ammonia cracking system (*e.g.,* transport to a remote customer *via* pipeline or vehicle, feed to a plant connected to the ammonia cracking system for use of the hydrogen, *etc.).* The feed rate of ammonia provided during the third step S3 can be substantially greater than the feeding of ammonia that occurs during the second phase of catalyst activation that can occur during the second step S2. This processing can result in cessation of any venting or a reduction in venting, non-use of the reactant circulation conduit arrangement, and optional use of the first portion 44 of off gas stream 42 for use as a source of fuel for the furnace and/or second portion 46 of off gas stream 42 for use in further enhancing hydrogen recovery *via* the hydrogen recovery unit U501 as discussed above.

We have found that performing the second phase of catalyst activation so that a less active downstream layer of catalyst material of the furnace F201 is activated last can facilitate temperature control during the catalyst activation process that can avoid prolonged use of excessive temperatures for the catalyst activation of other upstream equipment so that various upstream equipment can avoid exposure to excessively high temperatures. For example, the temperature profile to which the pre-heating heat exchangers E310, E311, E312, E2102, E2103, and E305 may be exposed to can be minimized by such a sequence of catalyst activation.

For instance, we have surprisingly found that the control of a temperature profile in the furnace F201 can drive the temperature for the catalyst activation process due, at least in part, to the recirculation of reactant during the catalyst activation processing. In situations where a higher activation temperature catalyst material in the furnace is activated before other upstream equipment may be activated, the temperature of the furnace can be relatively high and result in the output reactant gas and flue gas streams being at excessive temperatures when being passed to the heat exchangers other elements (*e.g.,* the reactant gas being recirculated to the pre-reactors). We have found that this can result in the heat exchangers being exposed to temperatures that can be in excess of 600°C and can be well over a typical design rating for heat exchanger equipment. This type of temperature condition during catalyst activation sequencing where the reactant gas flows passing through the heat exchangers for being pre-heated are at a relatively low flow rate can result in the heat exchangers and conduits through which flue gas and hot reactant gas streams pass being exposed to much higher temperatures for a significant portion of the catalyst activation process. We have also found that this type of temperature profile issue can be a significant determinant for arrangements where the catalyst materials that have very high activation temperatures are positioned in the tube(s) of the furnace F201 as compared to other catalyst material utilized in the apparatus.

We surprisingly found that controlling the temperature of the reactants during phased catalyst activation to control the catalyst activation so that a less active layer of catalyst material of the furnace F201 is activated last can avoid having the heat exchanges exposed to high temperature flue gas and reactant flows for prolonged time periods, which can avoid the excessive high temperature exposure problem. This can also allow embodiments to be provided with more routine equipment that can provide more design flexibility, maintenance flexibility, and reduced capital costs as well as avoid production delays that can be associated with acquisition of more specialized equipment.

Embodiments also permit the catalyst activation to occur without detrimental sintering of the catalyst material while oxides and/or a passivation layer is removed from the catalyst material for full activation of the catalyst material. The first and second catalyst activation phases can be controlled so that the temperature during each phase is increased incrementally in accordance with a pre-defined catalyst activation protocol. This temperature control can be employed *via* passing of the activation reactant (*e.g.,* hydrogen mixed with nitrogen gas, ammonia, *etc.)* as noted above, for example.

We have also found that the use of ammonia as the second reactant for the second phase of the catalyst activation can also provide a source of cooling for the overall system (*e.g.,* sensible heat, latent heat, endothermic reaction of ammonia cracking to form nitrogen and hydrogen during the catalyst activation processing provides a cooling effect, *etc.)* which can reduce the demand for other cooling media/equipment (*e.g.,* Cooling Water Tower/Air Cooler duty savings) during catalyst activation. The ammonia passed during the second phase of the catalyst activation process can crack in the pre-reactor(s) due to the heat to produce hydrogen and nitrogen, which can be provided to the upstream catalyst layer in the tube(s) of the radiant section 89 of the furnace F201, where the ammonia can further crack therein while being utilized as a reactant to provide more hydrogen for use in activation of the downstream portion of the catalyst material in the tube(s) of the radiant section 89 of the furnace F201. The ammonia feed rate during activation can be significantly lower than the design rate for ammonia cracking such that a higher amount of conversion can takes place *via* the pre-reactors than at the design point for ammonia cracking operations (*e.g.,* around 40% to 50% conversion vs. 20% to 30% conversion at design conditions for ammonia cracking). Since most of the ammonia used as the second reactant can be converted in the pre-reactor(s) during the second phase of catalyst activation, the temperature in the furnace tube(s) can increase rapidly to the desired activation temperature as there can be little to no endotherm from the ammonia cracking reaction to consume the heat produced by the burners of the furnace F201. This can permit the activation process to occur more quickly while also providing the desired temperature adjustment in a phased approach for catalyst activation that can also avoid sintering of the catalyst material that the passivation layer covers.

After the full activation of the catalyst materials used in the ammonia cracking apparatus 1 has occurred so that the catalyst material is fully activated (*e.g.,* the passivation layer has been fully removed from the catalyst material), the ammonia reactant stream can be vented to remove the impurities from the activation process (*e.g.,* water, *etc.).* Then, the ammonia cracking operations can be initiated *via* feeding the liquid ammonia at an ammonia cracking feed rate for hydrogen production *via* the ammonia cracking (*e.g.,* as discussed above). For example, the ammonia cracking operation can utilize the flow of ammonia as discussed above, for feeding ammonia through the first pre-reactor, second pre-reactor, and tube(s) of the radiant section 89 of the furnace F201 for cracking of the ammonia to produce hydrogen for subsequently feeding the cracked gas to the hydrogen recovery unit U501 for forming the hydrogen product stream 40.

It should be appreciated that the catalyst material that can be used in the one or more pre-reactors and tube(s) of the radiant section 89 of the furnace F201 can be any number of suitable catalyst materials for ammonia cracking. The catalyst materials can include supported catalysts as well as non-supported catalysts. The catalyst materials can include catalysts that include Ni, Ru, and/or other suitable elements that can help facilitate the cracking of ammonia into hydrogen and nitrogen. The shapes of the catalyst material can also include any of a number of suitable shapes, including irregular shaped catalyst particulates for the catalyst material, spherical shaped catalyst particulates, tubular shaped catalyst particulates, polygonal shaped catalyst particulates, or other shaped catalyst particulates. The beds of the catalyst material with the reactors and/or tube(s) of the radiant section 89 of the furnace F201 can include a collection of particulate catalyst particulates that are positioned for ammonia to be passable through the bed for contacting the catalyst particulates or other type of catalyst material, for example.

It should also be appreciated that other modifications can also be made to meet a particular set of criteria for different embodiments of the apparatus 1 or process. For instance, the arrangement of valves, piping, and other conduit elements (*e.g.,* conduit connection mechanisms, tubing, seals, valves, *etc.*) for interconnecting different units of the apparatus for fluid communication of the flows of fluid between different elements (*e.g.,* pumps, compressors, fans, valves, conduits, *etc.)* can be arranged to meet a particular plant layout design that accounts for available area of the apparatus, sized equipment of the apparatus, and other design considerations. For instance, the size of each reactor, heat exchanger, and/or furnace as well as the size and configuration of any adsorbers, adsorption systems, heat exchanger, conduits, expanders, pumps, or compressors can be modified to meet a particular set of design criteria. As another example, the flow rate, pressure, and temperature of the fluid passed through one or more heat exchangers and/or reactors and/or at least one furnace, as well as passed through other plant elements can vary to account for different plant design configurations and other design criteria. As yet another example, the number of plant units and how they are arranged can be adjusted to meet a particular set of design criteria. As yet another example, the material composition for the different structural components of the units of the plant and the plant can be any type of suitable materials as may be needed to meet a particular set of design criteria.

As yet another example, in some embodiments, it is contemplated that only a single reactant that includes ammonia (e.g., ammonia, ammonia mixed with nitrogen gas, *etc.)* may be used for catalyst activation. The ammonia that is utilized can be liquid ammonia that is vaporized, optionally mixed with nitrogen, and subsequently passed through one or more pre-reactors and at least one tube having catalyst material therein positioned in a radiant section 89 of a furnace F201 for activation of catalyst material. The catalyst material activation can occur over a pre-selected period of time in accordance with a pre-selected scheme of activation to provide full activation of all catalyst material within the temperature ratings of the various equipment in accordance with a pre-defined catalyst activation scheme. In some embodiments, such activation can be provided *via* use of recirculation of at least some of the ammonia while also adding additional liquid ammonia into the reactant feed for providing catalyst activation and also controlling temperature at different pre-reactors/furnace tubes and heat exchangers to provide a sequence of catalyst activation so that a catalyst material having a highest activation temperature in the tube(s) of a furnace is activated last while other catalyst material is activated prior to that highest activation temperature catalyst material within the tube(s) of the furnace.

As yet another example, embodiments of the apparatus 1 and process can each be configured to include process control elements positioned and configured to monitor and control operations (*e.g.*, temperature and pressure sensors, flow sensors, an automated process control system having at least one work station that includes a processor, non-transitory memory and at least one transceiver for communications with the sensor elements, valves, and controllers for providing a user interface for an automated process control system that may be run at the work station and/or another computer device of the plant, *etc*.). It should be appreciated that embodiments can utilize a distributed control system (DCS) for implementation of one or more processes and/or controlling operations of an apparatus or process as well.

As another example, it is contemplated that a particular feature described, either individually or as part of an embodiment, can be combined with other individually described features, or parts of other embodiments. The elements and acts of the various embodiments described herein can therefore be combined to provide further embodiments. Thus, while certain exemplary embodiments of the process, apparatus, system, and methods of making and using the same have been shown and described above, it is to be distinctly understood that the invention is not limited thereto but may be otherwise variously embodied and practiced within the scope of the following claims.

## Claims

1. A process for catalyst activation for ammonia cracking, the process comprising:
feeding a first reactant comprising hydrogen to at least one pre-reactor positioned upstream of a furnace having at least one tube within a radiant section of the furnace such that the first reactant is passed through catalyst material of the least one pre-reactor and subsequently passed through catalyst material of the at least one tube within the radiant section of the furnace;
in response to detecting a first level of catalyst activation, ceasing the feeding of the first reactant and initiating feeding of a second reactant comprising ammonia to the at least one pre-reactor and the at least one tube within the radiant section of the furnace such that the second reactant is passed through the catalyst material of the least one pre-reactor and subsequently passed through the at least one tube within the radiant section of the furnace to fully activate the catalyst material of the at least one tube;
and optionally
wherein the feeding of the first reactant also includes recirculating the first reactant through the at least one tube and the at least one pre-reactor for a first period of time.

2. The process according to claim 1, wherein the feeding of the first reactant and the feeding of the second reactant occurs such that the catalyst material in an upstream portion of the at least one tube is fully activated, the catalyst material of the at least one pre-reactor is then fully activated, and then catalyst material in a downstream portion of the at least one tube is fully activated after the catalyst material of the at least one pre-reactor is fully activated and after the catalyst material in the upstream portion of the at least one tube is fully activated.

3. The process according to any of the preceding claims, wherein the feeding of the second reactant comprising ammonia occurs such that the catalyst material in a downstream portion of the at least one tube is fully activated last.

4. The process according to any of the preceding claims, comprising:
mixing nitrogen with the ammonia of the second reactant so the second reactant has ammonia at a pre-selected ammonia concentration and/or the second reactant has a pre-selected flow rate; and/or
mixing nitrogen with the hydrogen of the first reactant so the first reactant has hydrogen at a pre-selected hydrogen concentration and/or the first reactant has a pre-selected flow rate.

5. The process according to any of the preceding claims, wherein the at least one pre-reactor includes a first pre-reactor having catalyst material within a vessel of the first pre-reactor and a second pre-reactor having catalyst material within a vessel of the second pre-reactor, the second pre-reactor being downstream of the first pre-reactor such that the second pre-reactor is between the at least one tube of the furnace and the first pre-reactor.

6. The process according to any of the preceding claims, wherein the feeding of the first reactant occurs such that:
(a) the catalyst material in an upstream portion of the at least one tube is fully activated;
(b) the catalyst material of the second pre-reactor is fully activated; and
(c) the catalyst material of the first pre-reactor is fully activated; and
wherein the feeding of the second reactant occurs such that:
(d) the catalyst material in a downstream portion of the at least one tube is fully activated.

7. The process according to any of the preceding claims, wherein the catalyst material of the downstream portion of the at least one tube has a higher activation temperature than the catalyst material of the upstream portion of the at least one tube, and/or wherein the catalyst material of the downstream portion of the at least one tube has a higher activation temperature than the catalyst material of the first pre-reactor and/or wherein the catalyst material of the downstream portion of the at least one tube has a higher activation temperature than at least some of the catalyst material of the second pre-reactor.

8. The process according to any of the preceding claims, comprising:
in response to detecting a first level of catalyst activation, venting of the first reactant while the second reactant is beginning to be fed toward the at least one pre-reactor and the at least one tube.

9. An apparatus for ammonia cracking that is configured to facilitate catalyst activation, the apparatus comprising:
a furnace having at least one tube that includes catalyst material within the at least one tube for cracking of ammonia, the catalyst material within the at least one tube having an upstream portion of catalyst material and a downstream portion of catalyst material;
at least one pre-reactor positioned upstream of the at least one tube, the at least one tube in fluid communication with the at least one pre-reactor;
the apparatus sized and configured so that:
a first reactant is feedable to the at least one pre-reactor and the at least one tube such that the first reactant is passed through catalyst material of the least one pre-reactor and subsequently passed through catalyst material of the at least one tube, and
a second reactant is feedable to the at least one pre-reactor and the at least one tube such that, in response to detecting a first level of catalyst activation, the first reactant is ventable and the second reactant is feedable to the at least one pre-reactor and the at least one tube such that the second reactant is passable through the catalyst material of the least one pre-reactor and subsequently passable through the at least one tube to fully activate at least some of the catalyst material of the at least one tube; and
wherein the apparatus optionally comprises a reactant recirculation conduit arrangement positioned so that the first reactant is recirculatable from an outlet of the at least one tube to the at least one pre-reactor.

10. The apparatus according to claim 9, wherein the apparatus is configured so that the feeding of the first reactant occurs so that the upstream portion of the catalyst material of the at least one tube is fully activated first and then the catalyst material of the at least one pre-reactor is fully activated, and
the second reactant is feedable to the at least one tube and the at least one pre-reactor such that the downstream portion of the catalyst material of the at least one tube is fully activated after the catalyst material of the at least one pre-reactor is fully activated and after the upstream portion of the catalyst material of the at least one tube is fully activated.

11. The apparatus according to claim 9 or claim 10, wherein the apparatus is configured so that the feeding of the second reactant occurs such that the downstream portion of the catalyst material of the at least one tube is fully activated last.

12. The apparatus according to any of claims 9 to 11, wherein the at least one pre-reactor includes a first pre-reactor having catalyst material within a vessel of the first pre-reactor and a second pre-reactor having catalyst material within a vessel of the second pre-reactor, the second pre-reactor being downstream of the first pre-reactor such that the second pre-reactor is between the at least one tube of the furnace and the first pre-reactor.

13. The apparatus according to any of claims 9 to 12, wherein the apparatus is configured so that the feeding of the first reactant occurs such that:
(a) the upstream portion of the catalyst material of the at least one tube is fully activated;
(b) the catalyst material of the second pre-reactor is fully activated, and
(c) the catalyst material of the first pre-reactor is fully activated; and
the feeding of the second reactant occurs so that:
(d) the catalyst material in the downstream portion of the catalyst material of the at least one tube is fully activated.

14. The apparatus according to any of claims 9 to 13, wherein the downstream portion of the catalyst material of the at least one tube has a higher activation temperature than the catalyst material of the upstream portion of the catalyst material of the at least one tube.

15. The apparatus according to any of claims 9 to 14, wherein the downstream portion of the catalyst material of the at least one tube has a higher activation temperature than the catalyst material of the first pre-reactor; and
wherein the catalyst material of the downstream portion of the at least one tube has a higher activation temperature than at least some of the catalyst material of the second pre-reactor.

16. The apparatus according to any of claims 9 to 15, wherein the catalyst material within the at least one tube has a more active portion of the catalyst material that is more active than a less active portion of the catalyst material; and
wherein the apparatus is configured so that the feeding of the second reactant is such that the less active portion of the catalyst material is fully activated.
